# EUROPÄISCHE PATENTSCHRIFT

(11) **EP 0 853 917 B1**
(45) Veröffentlichungstag und Bekanntmachung des Hinweises auf die Patenterteilung: **11.09.2002**
(21) Anmeldenummer: 98100279.3
(22) Anmeldetag: 09.01.1998
(51) Int. Cl.: A47L 9/28

(54) **Mittels eines Elektromotors betriebener Staubsauger, insbesondere Staubsaugersystem**
Suction cleaner running by means of an electric motor, in particular suction cleaner system
Aspirateur de poussières entrainé au moyen d'un moteur électrique, notamment système d'aspirateur de poussières

(30) Priorität: 21.01.1997 DE 19701810; 17.05.1997 DE 19720949
(43) Veröffentlichungstag der Anmeldung: 22.07.1998
(73) Patentinhaber: Vorwerk & Co. Interholding GmbH, 42275 Wuppertal (DE)
(72) Erfinder: Arnold, Hans-Peter, 51709 Marienheide (DE); Bumb, Germann, 42285 Wuppertal (DE); Caldewey, Uwe, 44229 Dortmund (DE); Cholewa, Lothar, 44267 Herne (DE); Lamping, Andreas, 42657 Solingen (DE); Heider, Uwe, 50354 Hürth (DE); Schönhoff, Helmut, 42897 Remscheid (DE)
(74) Vertreter: Müller, Enno, Dipl.-Ing.

(56) Entgegenhaltungen:
- EP-A- 0 320 878
- EP-A- 0 636 341
- WO-A-90/09139
- WO-A-95/27432
- DE-A- 3 311 771
- DE-A- 3 603 176
- US-A- 4 817 234
- PATENT ABSTRACTS OF JAPAN vol. 96, no. 9, 30.September 1996 & JP 08 131381 A (YASHIMA DENKI CO LTD), 28.Mai 1996,

## Beschreibung

Die Erfindung betrifft einen mittels eines Elektromotors betriebenen Staubsauger,insbesondere Staubsaugersystem mit einem Grundgerät, einem Saugschlauch, einem Gerätestiel und verschiedenen, wahlweise anzuschließenden Vorsatzgeräten, wobei der Elektromotor hinsichtlich seiner Leistung steuerbar ist und weiter die Steuerung über unterschiedliche Leistungssteller, vorzugsweise drei Leistungsstellern durchführbar ist.

Bei Staubsaugern, insbesondere Staubsaugersystemen gilt es als handhabungstechnisch vorteilhaft, daß mehrere, örtlich voneinander getrennte Leistungssteller zur Steuerung des Elektromotors vorgesehen sind. So ist bspw. aus der DE-OS 44 27 639 ein Staubsauger bekannt, welcher mehrere, in einem Ausführungsbeispiel drei Leistungssteller aufweist, wobei jedoch immer nur einer dieser Leistungssteller zur Steuerung des Elektromotors aktiviert ist. Hierzu dient eine interne Steuerung, welche die Bewegung des zuletzt getätigten Leistungsstellers registriert, diesen aktiviert und den oder die weiteren Leistungssteller deaktiviert. Weiter ist durch diese Offenlegung in weiterer Ausführung eine elektromechanische Umschaltung bekannt. So ist vorgesehen, daß in dem Staubsauger-Grundgerät mindestens ein Leistungssteller angeordnet ist, welcher durch Einstecken des Gerätestieles in das Grundgerät deaktiviert wird, zur Aktivierung des Leistungsstellers in dem Gerätestiel. Im Zuge des Einsteckens des Gerätestieles in das Grundgerät wird ein Schalter betätigt, welcher die Aktivierung und Deaktivierung bewirkt.

Im Hinblick auf den vorbeschriebenen Stand der Technik wird eine technische Problematik der Erfindung darin gesehen, einen Staubsauger, insbesondere ein Staubsaugersystem der in Rede stehenden Art handhabungs- und funktionstechnisch verbessert auszugestalten.

Diese Problematik ist zunächst und im wesentlichen beim Gegenstand des Anspruches 1 gelöst, wobei darauf abgestellt ist, daß die Leistungssteller über eine jeweils eigene Anschlußleitung mit einer Steuereinheit verbunden sind und daß bei mehrfach verbundenen Leistungsstellern eine vorgegebene Prioritätsfolge zur Aktivierung nur eines Leistungsstellers führt. Es ergeben sich somit insbesondere handhabungs- und funktionstechnische Vorteile. Bei einem Staubsaugersystem, bei welchem durch Umrüstung der Staubsauger verschiedenartig betrieben werden kann, ergibt sich durch die erfindungsgemäße Ausgestaltung der Effekt, daß der dem der gewählten Betriebsart zugeordnete Handgriff oder Handhabungsbereich den durch die Steuereinheit aktivierten Leistungssteller aufweist. Ein solches Staubsaugersystem kann bspw. aus einem Grundgerät mit Saugmotor und angeschlossener Filterkassette und adaptierbaren Elementen, wie z. B. einem Gerätestiel, einem Saugschlauch sowie elektrischen oder nicht-elektrischen Vorsatzgeräten bestehen. Weiter ist denkbar, das System um ein Fahrwerk für das Grundgerät zu erweitern. Erfindungsgemäß weist das gesamte Staubsaugersystem unterschiedliche Leistungssteller auf, einen im Grundgerät, einen weiteren im Bereich des saugschlauchseitigen Handgriffes und einen weiteren Leistungssteller im Bereich des Handgriffes des Gerätestieles. Durch die Art des Zusammenfügens der einzelnen Elemente lassen sich verschiedene Betriebsarten erreichen. So wird die Betriebsart Handstaubsauger gebildet durch Zusammenfügen von Grundgerät, ein Elektro-Anschlußkabel aufweisenden Gerätestiel und einem elektrischen oder nicht-elektrischen Vorsatzgerät. In dieser Staubsauger-Konfiguration weist der Leistungssteller im gerätestielseitigen Handgriff die höchste Priorität auf. Dies hat zur Folge, daß dieser aktiviert und der in dieser Konfiguration vorhandene zweite Leistungssteller im Grundgerät deaktiviert wird. Dadurch bedingt, daß jeder Leistungssteller jeweils über eine eigene Anschlußleitung mit der Steuereinheit verbunden ist, kann letztere in einfachster Weise alle momentan angeschlossenen Leistungssteller abfragen, wonach eine Auswertung innerhalb der Steuereinheit eine vorgegebene Prioritätsfolge vergibt. Hier gilt allgemein, daß der Leistungssteller im Saugschlauch eine höhere Priorität besitzt als der Leistungssteller im Gerätestiel und dieser wiederum eine größere Priorität besitzt als der Leistungssteller im Grundgerät. Bei einer Konfiguration des Staubsaugers als Handstaubsauger erfaßt die Steuereinheit den Anschluß zweier Leistungssteller, dem im Gerätestiel und dem im Grundgerät, womit eindeutig dem Leistungssteller im Gerätestiel die höhere Priorität zugeordnet wird. Über letzteren kann nunmehr die Leistungssteuerung des Elektromotors erfolgen, unabhängig von der Stellung des im Grundgerät angeordneten Leistungsstellers. Bevorzugt wird eine Ausgestaltung, bei welcher die jeweiligen Leistungssteller jeweils in Kombination mit galvanisch trennenden Schaltern ausgeführt sind. Dies hat zur Folge, daß der in dem Grundgerät integrierte Leistungssteller, welcher aufgrund dieser Anordnung in jeder Staubsauger-Konfiguration in den Steuerkreis eingebunden ist, als Hauptschalter fungiert. Dies hat weiter zur Folge, daß bei einer Betriebsart Handstaubsauger dieser grundgeräteseitige Leistungssteller zunächst in eine Elektrisch-Ein-Position verlagert werden muß. Um dies nicht durch den Anwender manuell durchführen lassen zu müssen, wird vorgeschlagen, daß diese Umschaltung des in dem Leistungssteller angeordneten Schalters mechanisch im Zuge des Einsteckens des Gerätestieles in das Grundgerät erfolgt. Eine solche Lösung ist aus einer nicht vorveröffentlichten Patentanmeldung der Anmelderin mit dem Aktenzeichen 196 08 247.1 bekannt, deren Inhalt hiermit vollinhaltlich in den Offenbarungsgehalt vorliegender Anmeldung mit einbezogen wird, auch zu dem Zwecke, Merkmale dieser Anmeldung in Ansprüche vorliegender Erfindung mit einzubeziehen. Hier ist eine Lösung gezeigt, bei welcher durch Einstecken des Gerätestieles in das Grundgerät der grundgerätseitige Leistungssteller in eine Maximal-Stellung verlagert wird und dort durch den Gerätestiel unbewegbar verriegelt wird. Über die beiden Leistungsleitungen, welche sich vom, das Anschlußkabel aufnehmenden Handgriff des Gerätestieles, über eine zwischen Gerätestiel und Grundgerät ausgebildete Schnittstelle bis zum Elektromotor im Grundgerät erstrecken, kann durch die Verlagerung des grundgeräteseitigen Leistungsstellers in eine Elektrisch-Ein-Position das Grundgerät mit Spannung versorgt werden. Über den im Handgriff des Gerätestieles angeordneten Leistungssteller, welcher, wie bereits erwähnt, gleichfalls mit einem galvanisch trennenden Schalter ausgebildet ist, kann nunmehr das Grundgerät bzw. der darin angeordnete Elektromotor ein- bzw. ausgeschaltet werden. Weiter erfolgt über diesen aktivierten Leistungssteller, bedingt durch die vorgegebene Prioritätsfolge, die Leistungsansteuerung des Elektromotors. In einer zweiten Betriebsart Überboden-Staubsauger ist das Grundgerät mit einem Elektroanschlußkabel, einem elektrischen oder nicht-elektrischen Saugschlauch und einem elektrischen oder nicht-elektrischen Vorsatzgerät ausgestattet. In dieser Konfiguration wird das Grundgerät vermittels eines an diesem ausgebildeten Handgriffes in Form eines Kurzstieles zur Aufnahme des Gerätestieles in der Handstaubsauger-Konfiguration getragen. Vermittels des über den Saugschlauch mit dem Grundgerät verbundenen elektrischen oder nicht-elektrischen Vorsatzgerätes können in dieser Konfiguration höher liegende Bereiche, wie bspw. Regale usw., abgesaugt werden. Hierzu kann bspw. eine übliche, nicht-elektrische Saugdüse eingesetzt werden. Weiter ist diese Konfiguration denkbar zum Absaugen von bspw. Matratzen, wobei hier ein elektrisches Vorsatzgerät, wie z. B. eine Saugdüse mit rotierenden Bürstenkörpern, eingesetzt werden kann. Das Elektro-Anschlußkabel wird anstelle des Gerätestieles in die Schnittstelle des Grundgerätes gesteckt, zur Stromversorgung desselben. Die erwähnte, vorgegebene Prioritätsfolge der Einzel-Leistungsstellerbewirkt hierbei eine Aktivierung des Leistungsstellers im elektrischen Saugschlauch und demzufolge eine Deaktivierung des Leistungsstellers im Grundgerät, welch letzterer in diesem Fall nur als Hauptschalter dient. Dies hat zur Folge, daß erst die elektrischen Kontakte des als Schalter-Steller-Moduls ausgebildeten Leistungsstellers des Grundgerätes betätigt werden müssen, bevor das gesamte Gerät vom Saugschlauch aus bedient werden kann. Nach Einschalten des Gerätes über den grundgeräteseitigen Leistungssteller ist die Leistungssteuerung des Elektromotors nur über den Leistungssteller im Saugschlauch möglich. Über diesen Leistungssteller kann das Gerät elektronisch ausgeschaltet werden, das Gerät jedoch verbleibt in einer Bereitschaftsstellung, welche erst nach Ausschalten über den gerätegehäuseseitigen Leistungssteller aufgehoben werden kann. Es ist weiter auch eine Überboden-Betriebsart denkbar, bei welcher ein Vorsatzgerät direkt, d. h. ohne Saugschlauch, an das Grundgerät angeschlossen wird. In dieser Konfiguration ist nur ein Leistungssteller, und zwar der generell vorhandene Leistungssteller im Grundgerät eingebunden. Diesem Leistungssteller kommen nunmehr die Aufgaben eines Hauptschalters und Stellers für die Leistungssteuerung des Elektromotors zu. Die interne Steuereinheit erkennt, daß keine weiteren Leistungssteller in dem System angeordnet sind. Dies gilt auch bei einer Konfiguration mit einem nicht-elektrischen Saugschlauch, da ein solcher keinen Leistungssteller aufweist. Weiter ist eine Betriebsart Bodenstaubsauger realisierbar, wobei das Grundgerät auf eine Fahrlafette gesteckt wird derart, daß über die Gerätestiel-Schnittstelle des Grundgerätes dieses mit Spannung versorgt wird. Hierzu besitzt die Fahrlafette einen Kabelspuler und die erforderliche Netzzuleitung. Bestimmungsgemäß erfolgt der Betrieb in der Betriebsart Bodenstaubsauger mit Saugschlauch, womit auch hier wieder dem Leistungssteller im Saugschlauch die höhere Priorität zugeordnet ist. Der in dem gerätegehäuseseitigen Leistungssteller integrierte Schalter dient auch in dieser Konfiguration als Hauptschalter, wobei bevorzugt eine Ausgestaltung gewählt ist, bei welcher durch Aufschieben des Grundgerätes auf die Fahrlafette dieser Hauptschalter in eine elektrische Ein-Stellung verlagert wird. Dies kann bspw. auf mechanischem Wege erfolgen. Eine derartige Lösung ist bspw. aus einer nicht vorveröffentlichten Patentanmeldung der Anmelderin mit dem Aktenzeichen 196 17 066.4 bekannt, deren Inhalt hiermit vollinhaltlich in den Offenbarungsgehalt vorliegender Anmeldung mit einbezogen wird, auch zu dem Zwecke, Merkmale dieser Anmeldung in Ansprüche vorliegender Erfindung mit einzubeziehen. Hier ist eine Lösung gezeigt, bei welcher im Zuge des Aufschiebens des Grundgerätes auf die Fahrlafette der grundgerätseitige Leistungssteller in eine Maximal-Stellung verschoben wird, ähnlich wie dies auch bei der Konfiguration als Handstaubsauger durch Einstecken des Gerätestieles in das Grundgerät erfolgt. Die Leistungssteuerung des Elektromotors erfolgt über den von der internen Steuereinheit erkannten Leistungssteller im Saugschlauch. Es sind weitere, wenn auch handhabungstechnisch unvorteilhafte Konfigurationen denkbar. So kann bspw. in der Betriebsart Handstaubsauger zwischen dem Grundgerät und dem elektrischen oder nicht-elektrischen Vorsatzgerät ein Saugschlauch mit Leistungssteller eingebunden werden. Bedingt durch die vorgegebene, eindeutige Prioritätsfolge, wird hier der schlauchseitige Leistungssteller aktiviert. Über das Schalter-Steller-Modulim gerätestielseitigen Handgriff wird lediglich das Gerät in eine Bereitschaftsstellung versetzt. Weiter ist die Möglichkeit gegeben, das Grundgerät in der Betriebsart Überboden- oder Bodenstaubsauger direkt, ohne Zwischenschaltung eines Saugschlauches, mit einem Vorsatzgerät zu versehen, womit die Leistungssteuerung direkt über den grundgerätseitigen Leistungssteller erfolgt. Schließlich ist denkbar, in der Betriebsart Überboden-Staubsauger einen Saugschlauch ohne Leistungssteller einzubinden, dies insbesondere bei Verwendung eines nicht elektrischen Vorsatzgerätes. Auch hier erfolgt die Leistungssteuerung über den Steller im Grundgerät. Bevorzugt sind die Leistungssteller als Potentiometer ausgebildet oder als Schiebeschalter, über die Widerstände geschaltet werden. Die Leistungsstellwerte bzw. Widerstandswerte können eine Phasenanschnittsteuerung sowohl direkt als analoger Spannungspegel bedienen als auch indirekt über eine Decodierstufe. In letzterem Fall kann das analoge Signal der Potentiometer in ein wertediskretes Signal umgewandelt werden, d. h. es können nur einige in der Steuerung hinterlegte Phasenanschnittwinkel und damit Leistungsstufen eingestellt werden. Dieses Verfahren eignet sich auch für den Fall, daß die Leistungssteller als Schiebeschalter ausgeführt werden. In diesem Fall sorgt die Decodierstufe wiederum dafür, daß die hinterlegten Leistungsstufen angefahren werden. Hierdurch wird eine sehr hohe Präzision in den Leistungsstufen erreicht, da eventuelle, auf der Übertragungsstrecke auftretende Störungen innerhalb bestimmter Grenzen tolerierbar sind. Bedingt dadurch, daß jeder Leistungssteller über eine jeweils eigene Anschlußleitung mit der Steuereinheit verbunden ist, ergibt sich in vorteilhafter Ausgestaltung, daß alle Leistungssteller zu einem etwa gleichen Spannungsabfall in der jeweiligen Anschlußleitung führen. Hierdurch bedingt können die bevorzugt drei Leistungssteller des gesamten Staubsaugersystemes gleich ausgebildet sein. Die Erkennung der in dem System angeordneten Leistungssteller erfolgt über die Erfassung des Spannungsabfalls an den den Leistungsstellern zugeordneten Anschlußpunkten innerhalb der Steuereinheit. Erfaßt letztere an mehreren Anschlußpunkten einen Spannungsabfall, so wird der zusätzlich zu dem grundgerätseitigen Leistungssteller zugeschaltete Steller aktiviert. Wie bereits erwähnt, sind die Leistungssteller jeweils in Kombination mit galvanisch trennenden Schaltern ausgeführt, wobei den Leistungsstellern im Gerätestiel und im Grundgerät die Aufgabe eines Hauptschalters zukommt. Der Schalter im saugschlauchseitigen Leistungssteller hingegen dient zur galvanischen Trennung der elektrischen Zuleitungen zum Vorsatzgerät. So ist über diesen saugschlauchseitigen Leistungssteller in der Betriebsart Bodenstaubsauger durch Verlagerung des Leistungsstellers in eine Aus-Position sowohl der Elektromotor im Grundgerät als auch das, bspw. elektrisch betriebene Borstenwalzen aufweisende Vorsatzgerät ausgeschaltet, wobei jedoch das Grundgerät weiterhin in einer Betriebs-Bereitschaftsstellung verbleibt. Weiter können die Leistungssteller zwischen einer Stellung Minimal-Leistung und der Stellung Elektrisch-Aus eine Elektronisch-Aus-Stellung aufweisen, in welcher Stellung der Elektromotor des Grundgerätes ausgeschaltet wird, ein elektrisches Vorsatzgerät hingegen weiterhin elektrisch angeschlossen bleibt, dies bspw. bei Einsatz einer sogenannten Frischer-Bürste zum Einbürsten von Reinigungsmitteln in Teppichböden oder dergleichen. Hierbei ist es erforderlich, den Saugmotor ständig abgeschaltet zu lassen, während die Schnittstelle zum Vorsatzgerät weiterhin mit Spannung versorgt wird. Weiter besitzen die Leistungssteiler in einer bevorzugten Ausgestaltung fünf Stellungen. Zum einen die bereits erwähnte, über den integrierten Schalter erreichbare Stellung Elektrisch-Aus und die zuvor beschriebene Stellung Elektronisch-Aus, welche einer Null-Watt-Stellung entspricht. Zum anderen sind drei Leistungsstufen wählbar, bevorzugt die Leistungsstufen 300 Watt, 550 Watt und 720 Watt. Erkennt die Steuereinheit auf der Anschlußleitung des saugschlauchseitigen Leistungsstellers einen Spannungsabfall, so sorgt eine Decodierstufe für die Freigabe der Maximal-Leistung, sobald diese über den Leistungssteller angewählt wird. Diese Maximalleistung ist bei Einsatz eines Saugschlauches infolge der erhöhten Strömungsverluste innerhalb des Saugschlauches erforderlich. Der Einsatz eines nicht elektrischen, d. h. eines keinen Leistungssteller aufweisenden Saugschlauches, erfolgt in der Regel in der Betriebsart Überboden-Staubsauger. Hier kann alternativ zur Erzielung der maximalen Leistung über den grundgeräteseitigen Leistungssteller durch die Steuereinheit die bspw. 720 Watt-Stellung freigegeben werden, sofern kein weiterer Leistungssteller in dem System zugeschaltet ist. In einer weiteren vorteilhaften Ausgestaltung ist vorgesehen, daß ein Vorsatzgerät für den Staubsauger einen in die Anschlußleitung eines Leistungsstellers schaltbaren Kennungswiderstand aufweist. Über einen solchen Kennungswiderstand kann bspw. die bereits beschriebene Frischer-Funktion automatisch hergestellt werden. Diesem Kennungswiderstand bzw. dem entsprechend erfaßten Spannungsabfall ist in der Steuereinheit eine höhere Priorität als allen Leistungsstellern des Staubsaugersystemes zugeordnet. Durch Aufsetzen eines entsprechend ausgerüsteten Frischer-Vorsatzgerätes wird der Kennungswiderstand in den Steuerkreis eingebunden, zur Reduzierung der Motorleistung auf bevorzugt 0 Watt. Dieser vermittels des Kennungswiderstandes angelegte Signalpegel entspricht dem Signalpegel im Saugschlauch, um das Grundgerät elektronisch abzuschalten (Elektronisch-Aus bzw. Null-Watt-Stellung). Durch die Festlegung der Priorität ist gewährleistet, daß der Elektromotor von keinem Leistungssteller eingeschaltet werden kann. Denkbar ist auch eine Ausgestaltung, bei welcher ein elektrisches Vorsatzgerät wahlweise als Elektro-Teppichbürste oder als Frischer-Bürste genutzt werden kann. Die Aktivierung der Frischer-Funktion kann bspw. automatisch oder über Betätigung einer Fußtaste erfolgen, wobei zugleich der den Saugmotor abschaltende Kennungswiderstandes zugeschaltet wird. Wie bereits erwähnt, erfolgt die Übertragung der Leistungsstellwerte bevorzugt als analoger Signalpegel. Alternativ hierzu ist auch denkbar, daß ein Leistungssteller der Anschlußleitung jeweils eine bestimmte Frequenz aufmoduliert. So können über unterschiedliche aufmodulierte Frequenzen die einzelnen Leistungssteller innerhalb des Staubsaugersystemes erkannt werden, zur vordefinierten Aktivierung eines Leistungsstellers und entsprechender Deaktivierung des oder der anderen Leistungssteller. Infolge dieser alternativen Ausgestaltung ist weiterhin denkbar, daß ein Vorsatzgerät der Anschlußleitung eine bestimmte, unterschiedlich zur Frequenz des Leistungsstellers und anderer Vorsatzgeräte ausgeprägte Kennungsfrequenz aufmoduliert. Weiter wird vorgeschlagen, daß ein Vorsatzgerät einen Ruhestandssensor aufweist, welcher nach einem vorgegebenen Zeitintervall zu einem kurzschlußartigen, geringen Spannungsabfall bezüglich der Anschlußleitung führt. Hierzu muß die Steuerleitung zum Vorsatzgerät gesondert betrachtet werden. Die Leitung geht zur Steuerung des Saugmotors vom Vorsatzgerät aus. Durch Schalten der Steuerleitung gegen eine definierte Netzleitung seitens des Vorsatzgerätes, bspw. bei einem Blockieren oder Parken einer Elektro-Bodenbürste, wird das Grundgerät unabhängig von der eingestellten Leistung in eine reduzierte Leistungsstufe, vorzugsweise minimale Leistung, geführt. Dieser Spannungsbereich nahe Null-Volt wird durch In-Serie-Schalten eines geeigneten Widerstandes zum aktivierten Leistungssteller für die Übertragung des Leistungsstellwertes nicht benutzt. Hierdurch ergibt sich für diese Funktion eine nochmals höhere Priorität gegenüber allen Leistungsstellern und auch gegenüber einem eventuell vorhandenen, schaltbaren Kennungswiderstand des Vorsatzgerätes, bspw. bei einem Frischer-Vorsatzgerät. Bei Registrierung eines derart kurzschlußartigen, geringen Spannungsabfalls regelt die Steuereinheit den Elektromotor auf eine minimale Leistung, bspw. 100 Watt zurück, wobei weiter denkbar ist, die elektrische Leitung zum Betrieb des Vorsatzgerätemotors gleichzeitig zu trennen. In einer vorteilhaften Weiterbildung des Erfindungsgegenstandes ist vorgesehen, daß die Steuereinheit in Abhängigkeit von den Kennungswiderständen oder -frequenzen der Vorsatzgeräte unterschiedliche Leistungen des Elektromotors freigibt. Diese Ausbildung ist sowohl bei elektrischen als auch bei nicht-elektrischen Vorsatzgeräten denkbar, wobei nicht-elektrische Vorsatzgeräte lediglich einen in den Steuerkreis einschleifbaren Kennungswiderstand aufweisen. So können bspw. bei bestimmten Vorsatzgeräten maximale Saugleistungen automatisch, d. h. unabhängig von der über den aktivierten Leistungssteller eingestellten Leistung abgerufen werden. Gleichfalls ist bei manchen Vorsatzgeräten eine reduzierte Leistung, bspw. 300 Watt, vorteilhaft, wozu in diesen Vorsatzgeräten ein einen entsprechenden Spannungsabfall bewirkender Kennungswiderstand eingeschleift ist. In der Betriebsart Bodenstaubsauger kann ein zweipoliger Schalter in der Fahrlafette integriert sein, durch welchen das Gerät elektrisch ein- bzw. ausgeschaltet werden kann. Somit kann ebenso eine Betriebsanzeige geschaltet werden. Bei Aufschieben des Bodengerätes auf die Fahrlafette wird der Leistungssteller im Grundgerät derart verlagert, daß eine definierte Position außerhalb des Bereiches Elektrisch-Aus eingestellt wird. Der Steller bleibt jedoch frei beweglich, die Position Elektrisch-Aus kann hingegen mechanisch verriegelt sein, wobei jedoch bevorzugt wird, diese Stellung manuell durch Handbetätigung aufhebbar auszugestalten. Es wird eine Ausgestaltung bevorzugt, bei welcher, wie beschrieben, der Leistungssteller im Grundgerät zugleich den Netzschalter bzw. Hauptschalter ausbildet, wobei im Zuge des Aufschiebens des Grundgerätes auf die Fahrlafette dieser Schalter in eine Elektrisch-Ein-Stellung verlagert wird. Das Gerät ist hiernach in einer Betriebsstellung. Eine gewünschte Betriebsanzeige ist örtlich von dem so gebildeten Hauptschalter getrennt in der Fahrlafette angeordnet. Um hier in einfacher Weise ein Ein- bzw. Ausschalten der Betriebsanzeige über die Betätigung des grundgeräteseitigen Leistungsstellers, bzw. dessen Schalters, zu erzielen, wird vorgeschlagen, daß bei Zusammenschaltung des Grundgerätes mit einer Fahrlafette eine mit der Steuereinheit verbundene Anschlußleitung mit einer lafettenseitigen Betriebsanzeige verbunden ist. Hierzu wird die in der Schnittstelle des Grundgerätes vorhandene Anschlußleitung, über welche normalerweise der Leistungssteller im Gerätestiel-Handgriff in der Betriebsart Handstaubsauger angeschlossen ist, genutzt, wobei in der Betriebsart Handstaubsauger über bestimmte Spannungspegel auf dieser Leitung die Leistung des Grundgerätes eingestellt werden kann. Dieser Spannungsbereich darf jedoch für den Betrieb der Betriebsanzeige nicht verwendet werden, da die Grundgeräteelektronik ansonsten derart beeinflußt würde, daß keine Leistungsstellung über den Leistungssteller im Grundgerät bzw. in einem angeschlossenen Saugschlauch möglich ist. Diese Leistungseinstellung muß weiterhin bestehenbleiben. Diesbezüglich wird vorgeschlagen, daß die Betriebsanzeige eine Glimmlampe ist. Die Verwendung einer Glimmlampe ist besonders günstig, da hierbei nur sehr kleine Ströme fließen. Der Einsatz bspw. einer Leuchtdiode ist weniger vorteilhaft, da diese einen größeren Strom aus der Leitung herausziehen würde, was wiederum ein Absenken des Spannungspegels in einen verbotenen Bereich nach sich ziehen würde. Wie bereits erwähnt, ist bevorzugt, daß die Glimmlampe durch den an dem Grundgerät angebrachten Leistungssteller ausschaltbar ist. Hierzu wird weiter vorgeschlagen, daß die zum Erlischen der Betriebsanzeige führende Leistungsabschaltung von einem im Grundgerät angeordneten Trennschalter hervorgerufen wird. Letzterer ist bevorzugt der im Leistungssteller integrierte Schalter. Zufolge dieser Ausgestaltungen ist eine Betriebsanzeige geschaffen, welche von einem Schalter geschaltet wird, wobei der Schalter, elektrisch gesehen, hinter der Betriebsanzeige liegt. Weiter erweist es sich hierbei als vorteilhaft, daß eine bestehende Leitung, die zur Übertragung eines Leistungsstellwertes in Form eines Spannungspegels dient, zusätzlich zur Ansteuerung der Betriebsanzeige verwendet wird, wobei beide Funktionen nicht gleichzeitig ausgeführt werden können, da entweder die Betriebsanzeige oder ein Leistungssteller eines Gerätestieles an der Leitung angeschlossen ist. Hierzu ist beispielsweise vorgesehen, daß die Glimmlampe über die Steuereinheit ansteuerbar ist. Diesbezüglich kann vorgesehen sein, daß zur Ansteuerung der Glimmlampe diese einerends im Bereich der Fahrlafette über einen Vorwiderstand und eine Diode an eine Leistungsleitung und anderends über eine Anschlußleitung an die im Grundgerät angeordnete Steuereinheit angeschlossen ist. Durch die Betriebsanzeige wird dem Benutzer angezeigt, daß das Gerät betriebsbereit ist und unter Spannung steht. Besonders wenn das Gerät mit einem Saugschlauch betrieben wird, kann ein Zustand erreicht werden, bei dem das Grundgerät elektronisch abgeschaltet ist. Die Grundgeräte-Elektronik ist aber weiterhin aktiv. Nur wenn die Betriebsanzeige leuchtet, kann das Gerät auch über den Saugschlauch eingeschaltet werden. Ein weiterer Vorteil ist in der Einfachheit der Schaltung zu sehen, da nur sehr wenige diskrete Bauelemente benötigt werden. Außerdem wird nur eine Leitung zur Erfüllung von zwei Funktionen verwendet. Hierdurch ergibt sich eine Kosteneinsparung und ein minimales Bauvolumen im Stecksystem. Das beschriebene Staubsaugersystem kann bspw. eine vierpolige Geräteschnittstelle an der Saugöffnung des Grundgerätes sowie eine dreipolige Geräteschnittstelle zum Gerätestiel besitzen. Die neuen technischen Merkmale der Erfindung zeichnen sich insbesondere dadurch aus, daß eine Steuerung bzw. Steuereinheit mehrere Leistungssteiler verarbeitet, wobei den Leistungsstellerm eindeutige Prioritäten zugeordnet sind. Weiter kann jeder Leistungssteller eine individuelle Kennlinie besitzen.

Bei einem Betrieb mit einem Gerätestiel ohne Elektro-Saugschlauch, d. h. in der Betriebsart Handstaubsauger, wird nicht die volle Saugmotorleistung genutzt. Weiter sind die Leistungssteller über Systemschnittstellen elektrisch mit der Steuerung verbunden, wobei die Übertragung der Leistungsstellwerte als analoger Signalpegel erfolgt, wobei weiter auch andere Übertragungsverfahren, wie z. B. Modulation, denkbar sind. Denkbar ist auch, die Art des Übertragungsverfahrens für jeden Steller beliebig auszugestalten. Hinsichtlich der Übertragung des Leistungsstellwertes kann eine Steuerleitung benutzt werden, die bereits mit der Funktion Leistungsreduzierung bei Parken oder Blockieren einer Elektrobodenbürste belegt ist, ohne diese zu beeinflussen. Diese Funktion Leistungsreduzierung wird mittels eines Kurzschlusses zwischen einer Steuerleitung und einer festgelegten Netzleitung erzielt. Weiter ist vorgesehen, daß hohe Saugmotorleistungen vorzugsweise mit niedrigen Widerstandswerten eingestellt werden. Als vorteilhaft erweist es sich, daß durch Abziehen eines Leistungsstellers, bspw. durch Abziehen des Gerätestieles, automatisch auf den nächsten Leistungssteller gemäß Prioritätsfestlegung umgeschaltet wird. Hierbei ist auch denkbar über die Steuereinheit bei einem Abziehen eines Leistungsstellers den Elektromotor zunächst in eine minimale Leistungsstellung herunterzufahren, dies unabhängig von der gewählten Stellung des nunmehr aktiven Leistungsstellers. Erst eine Betätigung dieses aktiven Leistungsstellers bewirkt dann wieder eine Steuerung des Elektromotors entsprechend dem gewählten Wert. Weiter wird das Grundgerät vom Saugschlauch elektronisch abgeschaltet, wobei gleichzeitig das Anschlußsystem zum Vorsatzgerät galvanisch getrennt wird. Durch Aufsetzen des Grundgerätes auf die Fahrlafette wird dieses elektrisch eingeschaltet, wobei jedoch die Elektronik weiterhin abgeschaltet bleibt. Durch Aufstecken des Gerätestieles wird der Leistungssteller im Grundgerät in eine Maximal-Position verlagert und bei einem Abziehen wiederum in eine Position Elektrisch-Aus zurückgezogen. Weiter ist vorgesehen, daß der Leistungssteller am Grundgerät in der Betriebsart Bodenstaubsauger mit Fahrlafette je nach Ausführung als Hauptschalter verwendet wird, der Stellbereich jedoch nur dann aktiv ist, wenn der vorgesehene Elektrosaugschlauch nicht angeschlossen ist. Es wird ein Anschlußsystem mit zwei Leistungs- und bspw. zwei Steuerleitungen verwendet, wobei der Spannungspegel auf der einen Leitung die Leistung des Saugmotors beeinflußt. Die zweite Leitung kann wahlweise eine spezielle Funktion in einem Vorsatzgerät auslösen, wie bspw. eine Umschaltfunktion in einer Düse, Beeinflussung der Motorleistung oder Aktivierung einer Funktion durch ein elektrisches Signal. Weiter kann die zweite Leitung ebenfalls zur Übertragung eines Signals zum Grundgerät dienen. Ferner können im Handgriff des Elektrosaugschlauches neben den Leistungskontakten auch die Steuerleitungen galvanisch getrennt werden. Es ist vorgesehen, daß Module als Leistungssteller verwendet werden, die jeweils aus Elementen zur Leistungsstellung, wie bspw. Potentiometer oder geschaltete Festwiderstände, und einem oder mehreren Schaltelementen zur galvanischen Trennung von Leitungen bestehen. Weiter ist vorgesehen, daß bei Betrieb als Handstaubsauger mit Gerätestiel das Vorsatzgerät über eine Steuerleitung bei elektrisch eingeschaltetem Grundgerät die Leistung des Saugmotors mitbestimmen kann, insbesondere in der Art, daß das Grundgerät elektronisch abgeschaltet ist. Diese Funktion kann z. B. für das Teppich-Frischen benutzt werden, wenn ein entsprechendes Vorsatzgerät angeschlossen ist, das den erforderlichen Signalpegel liefert.

Die elektronische Abschaltung des Bodengerätes kann auch dadurch realisiert sein, daß der Steller am Gerätestiel oder auch am Saugschlauch sowohl eine Stellung Elektrisch-Aus besitzen kann als auch eine Position Elektronisch-Aus, wodurch sich manuell die beschriebene Frischer-Funktion erreichen läßt, bei welcher das Grundgerät bzw. der Saugmotor abgeschaltet ist, jedoch die Stromversorgung des Vorsatzgerätes bestehen bleibt. Weiter wird bei einem Aufstecken des Grundgerätes auf die Fahrlafette das Schalter-Steller-Modul des Grundgerätes in eine bestimmte Position gebracht, dies in Abhängigkeit von der Ausführung des Gerätes. Wird ein Netzschalter im Fahrwerk integriert, wird das Modul derart betätigt, daß gerade der Bereich nach Elektrisch-Aus erreicht wird. Durch Ausführung der Elektronik wird der Zustand Elektronisch-Aus eingestellt. Ohne Fahrwerk kann in einer denkbaren Ausbildung dieser Bereich durch eine Mechanik instabil ausgeführt sein, so daß er nicht einstellbar ist. Bei einem Betrieb des Grundgerätes mit Fahrlafette ohne Saugschlauch kann wahlweise eine Regelmöglichkeit der Motorleistung über den Steller im Grundgerät bestehen oder eine definierte Leistung durch einen Widerstand in der Fahrlafette, die elektrisch den Steller des Gerätestiels simmuliert, eingestellt werden. Schließlich ist die Saugleistung des Grundgerätes über eine Steuerleitung vom Vorsatzgerät her beeinflußbar, wobei das Signal bei Betrieb ohne Saugschlauch Priorität besitzt. Die beschriebene Steuerung ermöglicht die Bedienung eines Staubsaugersystems mit drei Leistungsstellern, die jeweils individuelle Leistungskennlinien besitzen. Die Mehrfachnutzung der bereits belegten Steuerleitungen ergibt einen wirtschaftlichen Vorteil, wobei eine eindeutige Bedienbarkeit gegeben ist. Bezüglich der selbsttätigen Verlagerung des gerateseitigen Leistungsstellers wird vorgeschlagen, daß dieser bei Verbindung mit dem Gerätestiel oder mit der Fahrlafette durch einen überlaufbaren Vorsprung in eine Aktivierungsstellung bewegt wird. Vermittels dieses Vorsprunges wird der geräteseitige Leistungssteller bei Verbindung mit dem Gerätestiel in die Maximal-Stellung und bei einem Aufschieben des Grundgerätes auf die Fahrlafette in die Elektrisch-Ein-Position mechanisch verlagert. So wird weiter vorgeschlagen, daß der als Schiebeschalter ausgebildete, geräteseitige Leistungssteller einen Fernbetätigungsfortsatz aufweist, der durch Einstecken des Gerätestieles oder der Fahrlafette unter gleichzeitiger Betätigung des geräteseitigen Leistungsstellers beaufschlagt wird. Der als Schiebeschalter ausgebildete Leistungssteller im Grundgerät weist demzufolge einen mit dem Gerätestiel oder mit der Fahrlafette zusammenwirkbaren Fernbetätigungsfortsatz auf, mit Hilfe letzterem durch Einstecken des Gerätestieles in das Grundgerät bzw. durch Aufstecken des Grundgerätes auf die Fahrlafette der Schiebeschalter in die Maximal-Stellung bzw. in die Elektrisch-Ein-Position verlagert wird. Der Fernbetätigungsfortsatz kann materialeinheitlich mit dem Betätigungsbereich des Leistungsstellers verbunden sein. Es ist jedoch auch eine gelenkige Anbindung des Fernbetätigungsfortsatzes an den Leistungssteller denkbar. Weiter wird bevorzugt, daß bei einem Abziehen des Gerätestieles von dem Grundgerät bzw. einem Abziehen des Grundgerätes von der Fahrlafette der grundgehäuseseitige Leistungssteller selbsttätig in die Null-Stellung, d.h. in die Elektrisch-Aus-Stellung zurück verfährt, wodurch sichergestellt ist, daß der Saugmotor nach einer Trennung der Teile ausgeschaltet ist. In einer bevorzugten Ausbildung des Erfindungsgegenstandes ist vorgesehen, daß an dem Fernbetätigungsfortsatz zwei unterschiedliche, überlaufbare Schiebenocken ausgebildet sind. Hierbei übernimmt ein erster Schiebenocken die Aufgabe bei einem Herausziehen des Gerätestieles bzw. bei einem Abziehen des Grundgerätes von der Fahrlafette den grundgeräteseitigen Leistungssteller wieder zurück in die Null-Position zu verlagern. Ein zweiter, gleichfalls überlaufbarer Schiebenocken besitzt bevorzugt die Aufgabe bei einem Aufschieben des Grundgerätes auf die Fahrlafette den grundgeräteseitigen Leistungssteller in die gewünschte Elektrisch-Ein-Position zu bewegen. Hierzu wird vorgeschlagen, daß ein erster Schiebenocken nur überlaufbar ist in einer Minimalstellung des Leistungsstellers. Dies hat zur Folge, daß die Verbindung zwischen Grundgerät und Gerätestiel bzw. Grundgerät und Fahrlafette erst aufhebbar ist, wenn der grundgeräteseitige Leistungssteller in der Minimalposition, d.h. in der Elektrisch-Aus-Position ist, womit die Vorgabe erfüllt ist. Dies ist in einer Ausführungsform so gelöst, daß der erste Schiebenocken durch Ausweichen des Fernbetätigungsfortsatzes nach unten überlaufbar ist. Ist die Minimalstellung des Leistungsstellers erreicht, so kann der Fernbetätigungsfortsatz nach unten ausweichen, so daß der diesbezügliche Schiebenocken überlaufbar ist zur Aufhebung der Steckverbindung. Hierzu wird weiter vorgeschlagen, daß der Fernbetätigungsfortsatz auf einer Stufenbahn verschiebbar ist, wobei die Stufe der Ausweichstellung des ersten Schiebenockens zugeordnet ist. Diese Stufenbahn ist fest mit dem Grundgerät verbunden, wobei diese Stufenbahn im Bereich einer Steckaufnahme, außenwandig eines Steckers zur Bildung der elektrischen Steckverbindung ausgebildet sein kann. Der Leistungssteller bzw. dessen Fernbetätigungsfortsatz ist relativ zu dieser Stufenbahn verschiebbar angeordnet. Weiter ist vorgesehen, daß der zweite Schiebenocken in einer im wesentlichen senkrechten Richtung zum ersten Schiebnocken ausweichbar ist. Wie bereits erwähnt dient dieser zweite Schiebenocken bevorzugt zur Erzielung der Elektrisch-Ein-Stellung bei einem Aufschieben des Grundgerätes auf die Fahrlafette. Dieser zweite Schiebenocken tritt im Zuge des Aufschiebens des Grundgerätes auf die Fahrlafette gegen lafettenseitige Gegenmittel, womit der Fernbetätigungsfortsatz und somit auch der damit verbundene Leistungssteller in die gewünschte Position verschoben wird. Der grundgeräteseitige Leistungssteller kann aus dieser Elektrisch-Ein-Position heraus auch manuell in die Elektrisch-Aus-Position verlagert werden. Hierzu wird vorgeschlagen, daß der zweite Schiebenocken elastisch ausfederbar ist. Im Zuge der manuellen Verlagerung des Leistungsstellers federt der zweite Schiebenocken elastisch aus, womit dieser von dem lafettenseitigen Gegenmittel überfahren wird.
So kann bspw. vorgesehen sein, daß der zweite Schiebenocken an einer elastisch ausfedernden Längswand des Fernbetätigungsfortsatzes ausgebildet ist. Weiter wird bei einem erfindungsgemäßen Staubsauger, wobei eine Schnittstelle zwischen dem Grundgerät und dem Gerätestiel bzw. zwischen dem Grundgerät und der Fahrlafette durch einen Stecker und eine Steckdose gebildet ist, vorgeschlagen, daß an der Steckdose zur Zusammenwirkung mit dem Fernbetätigungsfortsatz ein Rückhaltevorsprung ausgebildet ist, der mit einem Schiebenocken zusammenwirkt. Dieser Rückhaltevorsprung gewährleistet ein Zurückstellen des Leistungsstellers in die Elektrisch-Aus-Position bei einer Aufhebung der Steckverbindung, wobei dieser Rückhaltevorsprung sowohl im Bereich der Fahrlafetten-Steckdose als auch im Bereich der Gerätestiel-Steckdose ausgebildet ist. Hierzu wird weiter vorgeschlagen, daß der Rückhaltevorsprung mit dem ersten Schiebenocken zusammenwirkt. Bevorzugt wird eine Ausgestaltung, bei welcher der Rückhaltevorsprung als eine, in das Innere der Steckdose ragende Zunge ausgebildet ist. Letztere kann materialeinheitlich aus einer die Steckdose umgebenden Wandung herausgebildet sein. Als vorteilhaft erweist es sich hierbei, daß die Zunge im Zuge einer Einführbewegung des Steckers überlaufbar ist, im Zuge einer Auszugsbewegung des Steckers jedoch widerhakenartig in Wirkung tritt. Somit ist die sichere Rückstellung des Leistungsstellers in die Elektrisch-Aus-Position gewährleistet.

Nachstehend ist die Erfindung desweiteren anhand der beigefügten Zeichnung, die jedoch lediglich mehrere Ausführungsbeispiele darstellt, erläutert. Hierbei zeigt:
- Fig. 1: ein erfindungsgemäßes Staubsaugersystem in einer Betriebsart Bodenstaubsauger mit einem an einer Fahrlafette angekoppeltem Grundgerät und einem über einen Saugschlauch und einem Saugrohr mit dem Grundgerät verbundenem Vorsatzgerät;
- Fig. 2: eine Detailvergrößerung aus der Fig. 1 gemäß dem Bereich II-II, einen Leistungssteller des Grundgerätes darstellend;
- Fig. 3: ein Prinzip-Schaltbild der elektrischen und elektronischen Steuerung des Staubsaugers gemäß Fig. 1 bei Einsatz eines elektrischen, mit einem Leistungssteller versehenen Saugschlauches und einem elektrischen Vorsatzgerät;
- Fig. 4: ein Prinzip-Schaltbild gemäß Fig. 3, wobei in dem elektrischen Vorsatzgerät Ruhestandssensor angeordnet ist;
- Fig. 5: ein weiteres Prinzip-Schaltbild gemäß Fig. 3, jedoch bei Einsatz eines nicht elektrischen Vorsatzgerätes;
- Fig. 6: ein Prinzip-Schaltbild gemäß Fig. 4, wobei jedoch das nicht-elektrische Vorsatzgerät einen Ruhestandssensor aufweist;
- Fig. 7: das Staubsaugersystem in der Betriebsart Bodenstaubsauger unter Verwendung eines nicht-elektrischen Saugschlauches und eines nicht-elektrischen Vorsatzgerätes in Form einer Fugendüse;

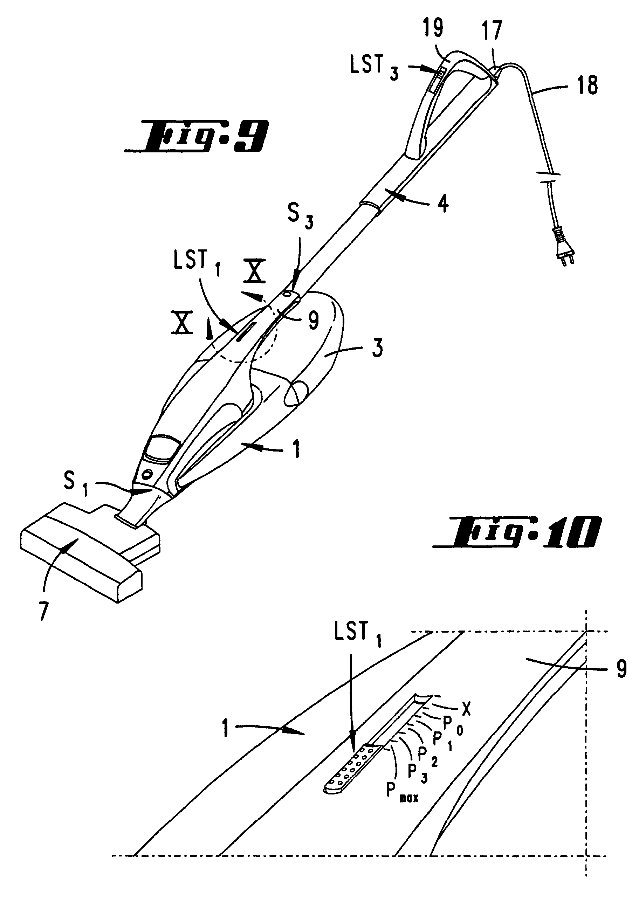

- Fig. 8: ein Prinzip-Schaltbild gemäß Fig. 3, die Konfiguration gemäß Fig. 7 betreffend;
- Fig. 9: das erfindungsgemäße Staubsaugersystem in einer Betriebsart Handstaubsauger mit einem Grundgerät, einem Gerätestiel, einer an dem Gerätestiel angeordneten Anschlußleitung und einem Vorsatzgerät;
- Fig. 10: eine Ausschnittsvergrößerung gemäß dem Bereich X-X in Fig. 9,
- Fig. 11: ein Prinzip-Schaltbild gemäß Fig. 3, die Ausführungsform gemäß Fig. 9 betreffend, unter Verwendung eines elektrischen Vorsatzgerätes;
- Fig. 12: ein Prinzip-Schaltbild gemäß Fig. 11, wobei das elektrische Vorsatzgerät einen Ruhestandssensor aufweist;
- Fig. 13: ein Prinzip-Schaltbild gemäß Fig. 11, wobei das elektrische Vorsatzgerät einen Kennungswiderstand aufweist;
- Fig. 14: ein Prinzip-Schaltbild gemäß Fig. 11, wobei das elektrische Vorsatzgerät sowohl einen Ruhestandssensor als auch einen Kennungswiderstand aufweist;
- Fig. 15: ein Prinzip-Schaltbild gemäß Fig. 11, wobei jedoch ein nicht-elektrisches Vorsatzgerät einen Ruhestandssensor aufweist;
- Fig. 16: ein Prinzip-Schaltbild gemäß Fig. 11, jedoch ein nicht-elektrisches Vorsatzgerät ohne Ruhestandssensor betreffend;
- Fig. 17: das erfindungsgemäße Staubsaugersystem in der Betriebsart Überboden-Staubsauger mit einem Grundgerät, einem an dem Grundgerät angeschlossenen Anschlußkabel und einem Saugschlauch zum Anschluß an eines nicht dargestellten Vorsatzgerätes;

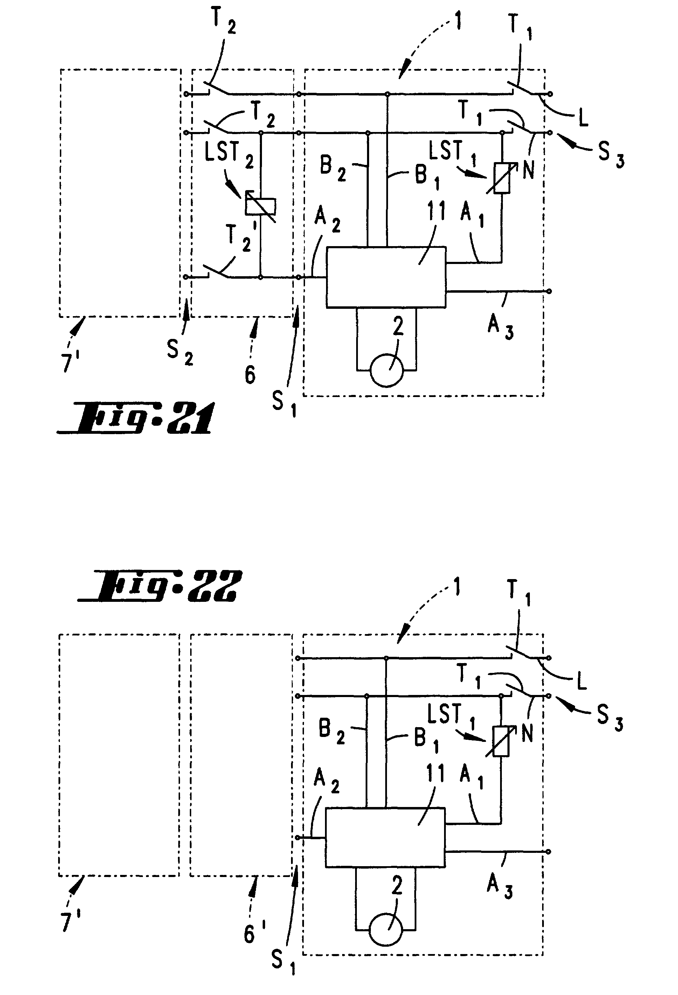

- Fig. 18: eine Ausschnittsvergrößerung gemäß dem Bereich XVIII-XVIII in Fig. 17;
- Fig. 19: ein Prinzip-Schaltbild gemäß Fig. 11, jedoch die Konfiguration gemäß Fig. 17 betreffend, mit einem elektrischen Saugschlauch und einem elektrischen Vorsatzgerät;
- Fig. 20: ein Prinzip-Schaltbild gemäß Fig. 19, wobei das elektrische Vorsatzgerät einen Ruhestandssensor aufweist;

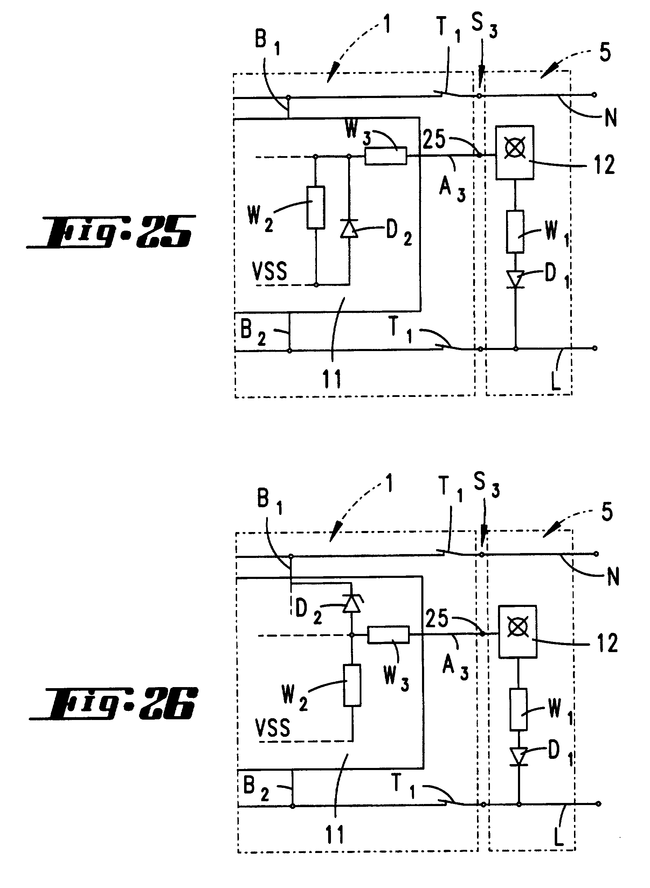

- Fig. 21: ein Prinzip-Schaltbild gemäß Fig. 19 bei Verwendung eines nicht-elektrischen Vorsatzgerätes;

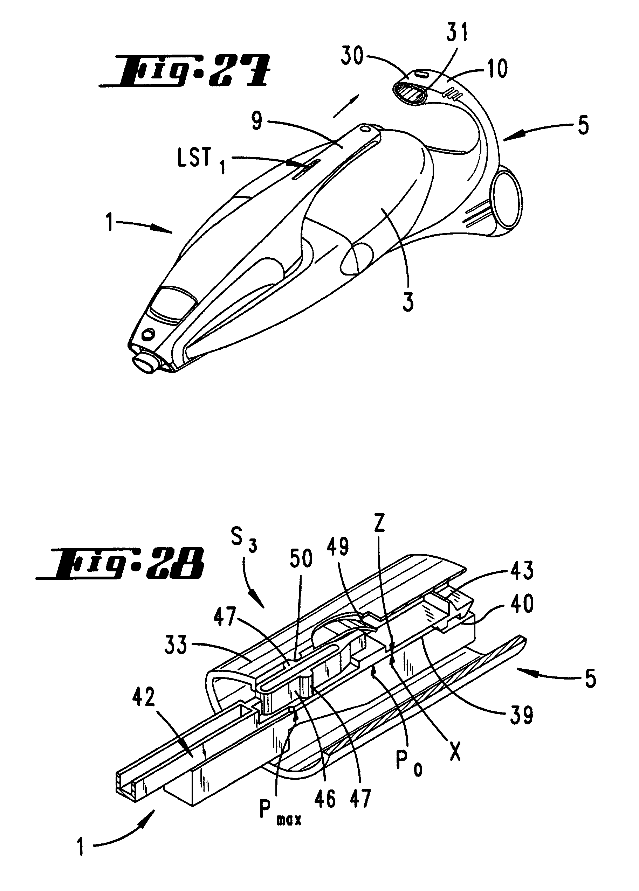

- Fig. 22: ein Prinzip-Schaltbild gemäß Fig. 19 bei Verwendung eines nicht-elektrischen Saugschlauches und eines nicht-elektrischen Vorsatzgerätes;
- Fig. 23: in schematischer Darstellung den Zusammenhang zwischen Spannungspegel und Motorleistung zur Codierung der Leistungsstufen;
- Fig. 24: ein Block-Schaltbild der Prioritäts-Decodierung.
- Fig. 25: ein Prinzip-Schaltbild der Ansteuerung einer fahrlafettenseitigen Betriebsanzeige in der Betriebsart Bodenstaubsauger, eine erste Ausführungsform betreffend.
- Fig. 26: ein Prinzip-Schaltbild gemäß Fig. 25, eine zweite Ausführungsform betreffend.
- Fig. 27: eine perspektivische Darstellung von Grundgerät und Fahrlafette im Zuge eines Aufschiebens des Grundgerätes zur Erzielung der Betriebsart Bodenstaubsauger;
- Fig. 28: partiell geschnitten den Kupplungsbereich zwischen einem grundgeräteseitigen Ausleger und einem lafettenseitigen Auslegerarm, im Zuge des Einschiebens eines Fernbetätigungsfortsatzes des grundgerätseitigen Leistungsstellers in den Bereich einer lafettenseitig ausgebildeten Steckdose;
- Fig. 29: eine Folgedarstellung der Fig. 28 nach vollständigem Aufschieben des Grundgerätes auf die Fahrlafette und damit einhergehendem vollständigen Eintreten des Fernbetätigungsfortsatzes und eines Steckers des Grundgerätes in den lafettenseitigen Auslegerarm;
- Fig. 30: einen Längsschnitt durch die Kupplungsanordnung, die Elektrisch-Ein-Position gemäß Fig. 29 betreffend;
- Fig. 31: den Schnitt gemäß der Linie XXXI-XXXI in Fig. 30;
- Fig. 32: eine der Fig. 29 entsprechende Darstellung, jedoch nach manueller Verlagerung des grundgeräteseitigen Leistungsstellers in eine Maximal-Position;
- Fig. 33: eine der Fig. 30 entsprechende Darstellung, jedoch die Stellung gemäß Fig. 32 betreffend;
- Fig. 34: eine der Fig. 31 entsprechenge Schnittdarstellung, jedoch eine Zwischenstellung im Zuge einer manuellen Verlagerung des grundgeräteseitigen Leistungsstellers in eine Elektrisch-Aus-Position betreffend;
- Fig. 35: eine weitere der Fig. 29 entsprechende Darstellung,jedoch nach manueller Verlagerung des Leistungsstellers in die Elektrisch-Aus-Position;
- Fig. 36: eine weitere der Fig. 30 entsprechende Darstellung, jedoch die Situation gemäß Fig. 35 betreffend;
- Fig. 37: den Schnitt gemäß der Linie XXXVII-XXXVII in Fig. 36;
- Fig. 38: eine weitere der Fig. 30 entsprechende Darstellung, jedoch eine Stellung im Zuge des Abziehens des Grundgerätes von der Fahrlafette betreffend;
- Fig. 39: eine perspektivische Darstellung von Grundgerät und Gerätestiel, im Zuge eines Einsteckens des Gerätestieles zur Bildung der Betriebsart Handstaubsauger;
- Fig. 40: eine der Fig. 28 entsprechende perspektivische Schnittdarstellung, jedoch den Kupplungsbereich zwischen dem grundgeräteseitigen Ausleger und dem Gerätestiel betreffend;
- Fig. 41: eine der Fig. 30 entsprechende Schnittdarstellung, jedoch den Kupplungsbereich gemäß Fig. 40 betreffend;
- Fig. 42: eine der Fig. 40 entsprechende Darstellung nach vollständigem Einschieben des Gerätestieles in das Grundgerät zur Erzielung der Maximal-Stellung des grundgeräteseitigen Leistungsstellers;
- Fig. 43: eine der Fig. 41 entsprechende Darstellung, jedoch die Stellung gemäß Fig. 42 betreffend;
- Fig. 44: eine der Fig. 40 entsprechende Darstellung, jedoch eine alternative Ausführungsform des Fernbetätigungsfortsatzes betreffend.

Dargestellt und beschrieben ist ein Staubsaugersystem, welches sich im wesentlichen aus einem Grundgerät 1 mit einem nicht näher dargestellten Elektromotor 2 bzw. einem Saugmotor und einer angeschlossenen Filterkassette 3 und adaptierbaren Elementen zusammensetzt. Letztere sind in den gezeigten Ausführungsbeispielen ein Gerätestiel 4, eine Fahrlafette 5, ein Saugschlauch 6 sowie ein Vorsatzgerät 7. Durch die Art des Zusammenfügens lassen sich verschiedene Betriebsarten erreichen.

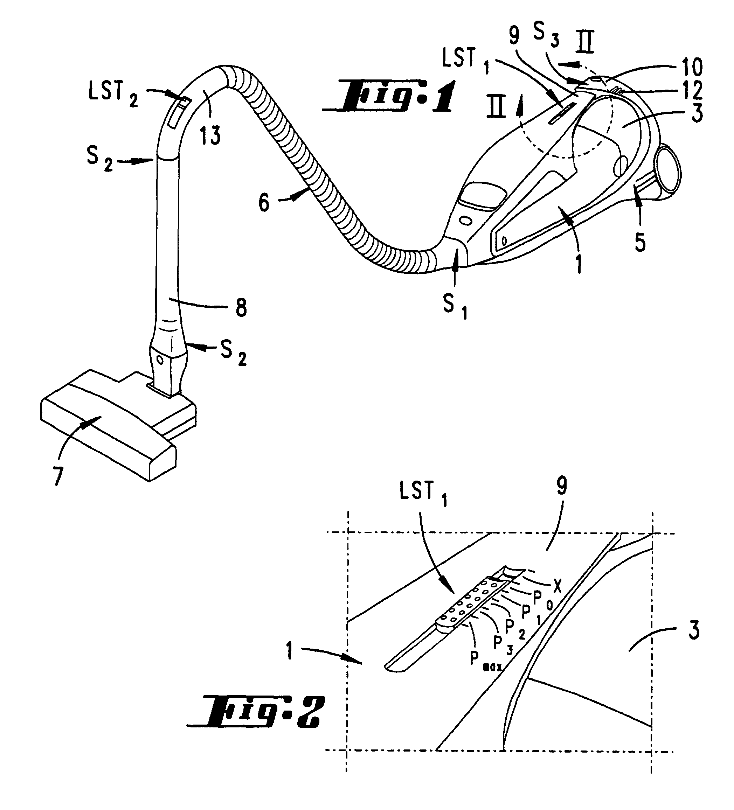

In Fig. 1 ist eine Konfiguration gezeigt in der Betriebsart Bodenstaubsauger. Das Grundgerät 1 ist über eine als Schnittstelle S3 ausgebildete Steckverbindung mit der Fahrlafette 5 gekoppelt. Weiter ist an dem Grundgerät 1 über eine weitere Schnittstelle S1 der Saugschlauch 6 angeschlossen, dessen freies Ende ein Saugrohr 8 aufnimmt, welch letzteres funktionstechnisch gesehen lediglich eine Verlängerung des Saugschlauches 6 darstellt. An diesem Saugrohr 8 ist weiter ein, bspw. in Form einer Elektro-Teppichbürste ausgebildetes Vorsatzgerät 7 über eine Schnittstelle S2 angeschlossen. Da, wie bereits erwähnt, das Saugrohr 8 lediglich eine Verlängerung des Saugschlauches 6 darstellt, bildet sich die zwischen Saugrohr 8 und Vorsatzgerät 7 ausgebildete Schnittstelle S2 gleichwohl auch zwischen Saugschlauch 6 und Saugrohr 8 aus, womit auch diese Schnittstelle nachstehend mit S2 bezeichnet wird.

Bezüglich der verschiedenen Konfigurationsmöglichkeiten des Systemstaubsaugers und der Ausbildung der Schnittstelle S3 wird auf zwei nicht vorveröffentlichte Druckschriften DE-A-196 17 066 und DE-A-196 08 247 verwiesen.

Bei Nutzung des Systemstaubsaugers als Bodenstaubsauger gemäß Fig. 1 erfolgt der Elektroanschluß über die Schnittstelle S3, wozu die Fahrlafette 5 eine Anschlußleitung aufweist mit endseitigem Netzstecker. Diese Anschlußleitung kann innerhalb der Fahrlafette 5 auf einer Kabeltrommel oder dergleichen platzsparend untergebracht sein.

Das Grundgerät 1 weist einen Ausleger 9 auf mit einer endseitigen, dreipoligen Steckaufnahme. In diesem Ausleger 9 ist ein erster Leistungssteller LST1 angeordnet, welcher als Schalter-Steller-Modul ausgebildet ist. Dieses Modul besteht aus Elementen zur Leistungsstellung, z. B. Potentiometer oder geschaltete Festwiderstände und mehreren, in dem gezeigten Ausführungsbeispiel zwei Schaltelementen T1 zur galvanischen Trennung von Leitungen. Für die Betriebsart Bodenstaubsauger wird das Grundgerät 1 auf die Fahrlafette 5 aufgeschoben, wobei im Bereich der Schnittstelle S3 eine Verrastung erfolgt. Der Ausleger 9 des Grundgerätes 1 taucht mit seiner endseitigen Steckaufnahme in eine gleichfalls dreipolig ausgebildete Steckerführung der Fahrlafette 5 ein, welche Steckerführung im Bereich eines frei auskragenden Endes eines lafettenseitigen Auslegerarmes 10 ausgebildet ist. Im Zuge dieses Aufschiebens wird der Leistungssteller LST1 in eine dessen Schaltelemente T1 schließende Stellung verlagert. Hierzu besitzt der Leistungssteller LST1 einen Fernbetätigungsfortsatz, welcher im Zuge des Aufschiebens des Grundgerätes 1 auf die Fahrlafette 5 zur Verlagerung beaufschlagt wird. Die hiernach erreichte Stellung des Leistungsstellers LST1 ist in der Fig. 2 veranschaulicht. Es ist zu erkennen, daß dieser aus einer Position Elektrisch-Aus, welche mit X gekennzeichnet ist, in eine Position Elektrisch-Ein verlagert ist. Diese bevorzugt leicht rastende Stellung ist mit P0 gekennzeichnet. Das Grundgerät 1 ist somit in einer Bereitschaftsstellung, d. h. das Gerät ist elektrisch ein-, elektronisch jedoch noch ausgeschaltet.

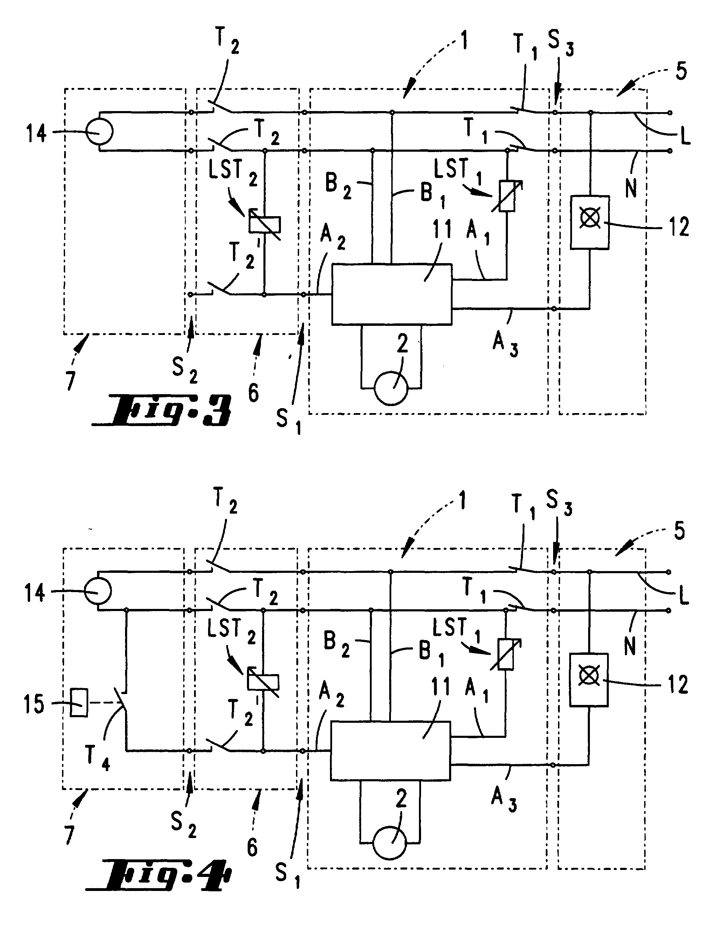

In Fig. 3 ist ein Prinzip-Schaltbild gezeigt, wobei die einzelnen Staubsaugerelemente in strichpunktierter Linienart blockartig dargestellt sind. Es ist eine Aneinanderreihung der für die Betriebsart Bodenstaubsauger gewählten Elemente erkennbar, unter Fortlassung des lediglich als Verlängerung für den Saugschlauch 6 gebildeten Saugrohres 8.

So ist zwischen dem Grundgerät 1 und der Fahrlafette 5 die Schnittstelle S3, zwischen dem Grundgerät 1 und dem Saugschlauch 6 die Schnittstelle S1 und zwischen diesem Saugschlauch 6 und dem Vorsatzgerät 7 die Schnittstelle S2 ausgebildet. Alle Schnittstellen S1 bis S3 sind dreipolig ausgebildet, wobei zwei Pole die Schnittstellen für die elektrischen Leitungen bilden. Ein dritter Pol bildet die Schnittstelle für Anschlußleitungen, welche die Aufgabe von Steuerleitungen besitzen.

Es ist zu erkennen, daß die beiden Leistungsleitungen L und N durch die einzelnen Bauelemente, in diesem Fall durch die Fahrlafette 5, das Grundgerät 1, den Saugschlauch 6 und dem Vorsatzgerät 7 durchgeführt sind. Wie bereits erwähnt, ist die Fahrlafette 5 mit einem Elektro-Anschlußkabel versehen, welches direkt zur Schnittstelle S3 geführt ist. Unmittelbar hinter dieser Schnittstelle S3 sind, elektrisch gesehen, zwei über dem Leistungssteller LST1 betätigbare Schaltelemente T1 angeordnet, wobei jeweils ein Schaltelement T1 zur Unterbrechung der Leistungsleitung L bzw. N dient. Hiernach setzen sich die Leistungsleitung L und N innerhalb des Grundgerätes 1 ununterbrochen fort bis zur Schnittstelle S1.

Weiter ist in dem Grundgerät 1 eine Steuereinheit 11 aufgenommen. Die Stromversorgung dieser Steuereinheit 11 erfolgt über zwei mit den Leistungsleitungen L und N verbundene Leitungen B1 und B2. Diese Steuereinheit 11 dient zur Leistungssteuerung des in dem Grundgerät 1 installierten Elektromotors 2, welcher bevorzugt in Form einer Saug-Gebläse-Einheit ausgebildet ist.

Weiter ist die Steuereinheit 11 mit drei Anschlußleitungen A1 bis A3 versehen, wobei die Anschlußleitung A2 zur Schnittstelle S1 und die Anschlußleitung A3 zur Schnittstelle S3 geführt ist. Die Anschlußleitung A1 führt innerhalb des Grundgerätes 1 direkt zu dem Leistungssteller LST1, welcher anderendig mit der Leistungsleitung L, elektrisch gesehen, hinter dem durch den Leistungssteller LST1 schaltbaren Schalter T1 verbunden ist.

In der Fahrlafette 5 ist eine Betriebsanzeige 12 vorgesehen, welche im Ausführungsbeispiel als Glimmlampe ausgebildet ist. Diese ist einerends innerhalb der Fahrlafette 5 mit der Leistungsleitung L verbunden. Die anderendig angeordnete Anschlußleitung ist in die Schnittstelle S3 gezogen, wobei nach Aufschieben des Grundgerätes 1 auf die Fahrlafette 5 eine Verbindung zur Anschlußleitung A3 gegeben ist.

Der Saugschlauch 6 ist im Bereich des Handgriffes 13 gleichfalls mit einem Leistungssteller LST2 ausgestattet, welcher gleich dem zuvor näher beschriebenen Leistungssteller LST1 im Grundgerät 1 entspricht. In dem Saugschlauch 6 sind die drei Leitungen, die beiden Leistungsleitungen L und N sowie die Anschlußleitung A2, weiter geführt bis zur Schnittstelle S2. Das bevorzugt als Schiebepotentiometer ausgebildete Element des Leistungsstellers LST2 ist geschaltet zwischen der Leistungsleitung L und der Anschlußleitung A2, wobei die durch den Leistungssteller LST2 betätigbaren Schalter T2 in die Leistungsleitung L und in die Anschlußleitung A2 eingreifen, dies, elektrisch gesehen, hinter dem Potentiometer des Leistungsstellers LST2.

Das in dem Prinzip-Schaltbild veranschaulichte Vorsatzgerät 7 ist als elektrisches Vorsatzgerät ausgebildet, wozu dieses einen über die Schnittstelle S2 mit den Leistungsleitungen L und N verbundenen Elektromotor 15 besitzt. Die zu der Schnittstelle S2 geführte Anschlußleitung A2 wird in diesem Ausführungsbeispiel nicht genutzt.

Erfindungsgemäß soll je nach gewählter Betriebsart des Systemstaubsaugers nur ein Leistungssteller zur Leistungssteuerung des Elektromotors 2 aktiviert sein. In dem in Fig. 3 gezeigten Fall eines Bodenstaubsaugers soll der aktivierte Leistungssteller der Leistungssteller LST2 im Handgriff 13 des Saugschlauches 6 sein. Die Aktivierung bzw. Deaktivierung der einzelnen Leistungssteller ist gelöst durch eine in der Steuereinheit 11 festgelegte Prioritätsfolge. Hier gilt, daß der Leistungssteller LST2 im Saugschlauch 6 eine höhere Priorität besitzt als ein später noch beschriebener Leistungssteller LST3 in dem Gerätestiel 4 und dieser wiederum eine höhere Priorität besitzt als der Leistungssteller LST1 im Grundgerät. Zur Übertragung der Leistungsstellwerte werden Spannungspegel verwendet, wobei jeder Spannungspegel genau einer Funktion zugeordnet ist. Die Spannungspegel aller drei Leistungssteller LST1 bis LST3 sind in den gezeigten Ausführungsbeispielen gleich gewählt. Es sind jedoch auch alternativ unterschiedliche Spannungspegel denkbar.

Durch den Anschluß der drei Leistungssteller LST1 bis LST3 über jeweils eigene Anschlußleitungen A1 bis A3 ist für die Steuereinheit 11 registrierbar, welche Leistungssteller in der momentan gewählten Konfiguration des Systemstaubsaugers eingesetzt sind. In dem in Fig. 3 gezeigten Beispiel erfaßt die Steuereinheit 11 die Leistungssteller LST1 im Grundgerät 1 und LST2 im Saugschlauch 6. Aufgrund der vorgegebenen Prioritätsfolge wird der Leistungssteller LST2 im Saugschlauch als aktiver Leistungssteller erkannt. Dies hat zur Folge, daß die Leistungssteuerung des Elektromotors 2 nur über den im Handgriff 13 des Saugschlauches 6 angeordneten Leistungssteller LST2 durchführbar ist. Eine Verlagerung des Leistungsstellers LST1 hat keinen Einfluß auf die elektronische Auswertung der Steuereinheit 11, was zur Folge hat, daß eine derartige Verlagerung keine Leistungsänderung des Elektromotors 2 bewirkt.

Der Leistungssteller LST1 dient in dieser Konfiguration lediglich als Hauptgeräteschalter. Wie bereits erwähnt, wird durch Aufschieben des Grundgerätes 1 auf die Lafette 5 der Leistungssteller LST1 derart zwangsverlagert, daß dessen Schalter T1 schließen, womit das gesamte Gerät in einer Betriebsstellung verweilt.

Hierbei wird durch die Betriebsanzeige 12 dem Benutzer angezeigt, daß das Gerät betriebsbereit ist und unter Spannung steht. Insbesondere, wenn das Gerät, wie dargestellt, mit einem Saugschlauch 6 betrieben wird, kann ein Zustand erreicht werden, bei welchem das Grundgerät 1 elektronisch abgeschaltet ist. Die Grundgeräteelektronik ist jedoch weiterhin aktiv. Weiter wird dem Benutzer angezeigt, daß nur das Gerät über den Saugschlauch 6 eingeschaltet werden kann, wenn die Betriebsanzeige leuchtet. Zur Ansteuerung der Betriebsanzeige 12 ist diese über die Anschlußleitung A3, über welche normalerweise der Leistungssteller LST3 des Gerätestieles 4 in einer Betriebsart Handstaubsauger angeschlossen ist, mit der Steuereinheit 11 verbunden. Der Spannungsbereich für den Betrieb der Betriebsanzeige 12 ist so gewählt, daß dieser außerhalb des Spannungsbereiches des normalerweise angeschlossenen Leistungsstellers LST3 liegt, da ansonsten die Grundgeräteelektronik in der Steuereinheit 11 derart beeinflußt würde, daß keine Leistungsstellung über den Leistungssteller LST1 im Grundgerät 1 bzw. bei Anschluß eines Saugschlauches 6 über den Leistungssteller LST2 möglich wäre. Bspw. fließt der Glimmlampenstrom von der Steuereinheit 11 über die Betriebsanzeige 12 an die negative Betriebsspannung der Elektronik auf der Leistungsleitung L. Durch die Belastung mit der Glimmlampe der Betriebsanzeige 12 wird das Potential auf der Anschlußleitung A2 auf einen Wert angehoben, welcher negativer ist als die negative Betriebsspannung. Der Spannungsbereich zur Leistungsstellung bleibt demzufolge unbeeinflußt von der Glimmlampe.

Durch die gewählte Schaltung wird die Glimmlampe der Betriebsanzeige 12 nunmehr jedesmal dann eingeschaltet, sobald der in dem Leistungssteller LST1 integrierte Netzschalter T1 geschlossen ist. Die Verwendung einer Glimmlampe ist hierbei besonders günstig, da nur sehr kleine Ströme fließen. Durch die Ansteuerung der Betriebsanzeige 12 über die Anschlußleitung A3 kann in vorteilhafterweise die gleichfalls für den Gerätestiel 4 ausgebildete Schnittstelle S3 genutzt werden. Es ist keine weitere Leitung und somit keine Umgestaltung der Schnittstelle S3 nötig.

Wie bereits erwähnt, ist in der in Fig. 3 gezeigten Konfiguration der Leistungssteller LST2 im Handgriff 13 des Saugschlauches 6 bedingt durch die festgelegte Prioritätsfolge aktiviert. Dieser Leistungssteller LST2 weist gleich dem Leistungssteller LST1 Schalter T2 zur galvanischen Trennung der Leistungsleitung L und N auf. Weiter ist ein Schalter T2' in der Anschlußleitung A2 vorgesehen.

In einer Grundstellung, in welcher der Staubsauger elektronisch, jedoch bedingt durch den eingeschalteten Hauptschalter LST1 nicht elektrisch ausgeschaltet ist, nimmt der Leistungssteller LST2 eine Position ein, welche Position in Fig. 2 mit X gekennzeichnet ist. In dieser Figur ist der Leistungssteller LST1 dargestellt, die Steuerungsfunktionen sind jedoch, wie bereits erwähnt, voll auf den Leistungssteller LST2 übertragbar.

Zum Einschalten des Elektromotors 14 des Vorsatzgerätes 7 wird der Leistungssteller LST2 in eine Position hinter der Position Elektrisch-Aus (Position X) verlagert. Im Zuge dieser Bewegung werden die Schalter T2 und T2' geschlossen. Infolgedessen läuft der Elektromotor 14 des Vorsatzgerätes 7 an. Je nach Verschiebeweg des Leistungsstellers LST2 wird eine gewünschte Leistungsstufe des Elektromotors 2 im Grundgerät 1 gewählt. Diese verschiedenen Leistungsstufen sind mit P1 bis P3 und P-Max gekennzeichnet, wobei bspw. die Leistungsstufe P1 einer Leistungsaufnahme von ca. 100 Watt, die Leistungsstufe P2 einer Leistungsaufnahme von ca. 300 Watt, die Leistungsstufe P3 einer Leistungsstufe von ca. 550 Watt und die Leistungsstufe P-Max einer maximalen Leistungsaufnahme von ca. 720 Watt entspricht. Die Leistungsstufe P-Max wird in der Steuereinheit 11 freigegeben, wenn ein elektrischer Saugschlauch 6 adaptiert ist. Dies erkennt die Steuereinheit 11 an dem Spannungsabfall zwischen der Anschlußleitung A2 und der Leistungsleitung N, bedingt durch den eingefügten Leistungssteller LST2. Bedingt durch die bekannten Strömungsverluste innerhalb eines Saugschlauches werden in dieser Betriebsart höhere Leistungen benötigt. Weiter ist diese maximale Leistungsstufe auch durch den grundgeräteseitigen Leistungssteller LST1 anwählbar.

Die Leistungsstufen P2 und P3 sind in jeder Konfiguration von jedem aktivierten Leistungssteller anwählbar.

Die mit P0 und P1 gekennzeichneten Leistungsstufen können auch in einer alternativen Ausgestaltung entfallen.

Bevorzugt wird eine Ausgestaltung, bei welcher die einzelnen Leistungsstufen rastend ausgebildet sind, zur erleichterten Auffindung durch den Benutzer.

Über den Saugschlauch 6 bzw. über dessen Leistungssteller LST2 ist das Gerät elektronisch abschaltbar, wobei der Zustand derart auf der Leitung codiert ist, daß ein Stromfluß erforderlich ist. Wird über den Saugschlauch 6 das Grundgerät 1 elektronisch abgeschaltet, so sind in dieser Stellung die Schalter T2 im als Schalter-Steller-Modul ausgebildeten Leistungssteller LST2 geöffnet, so daß die Schnittstelle zum Vorsatzgerät 7 auf jeden Fall galvanisch getrennt ist.

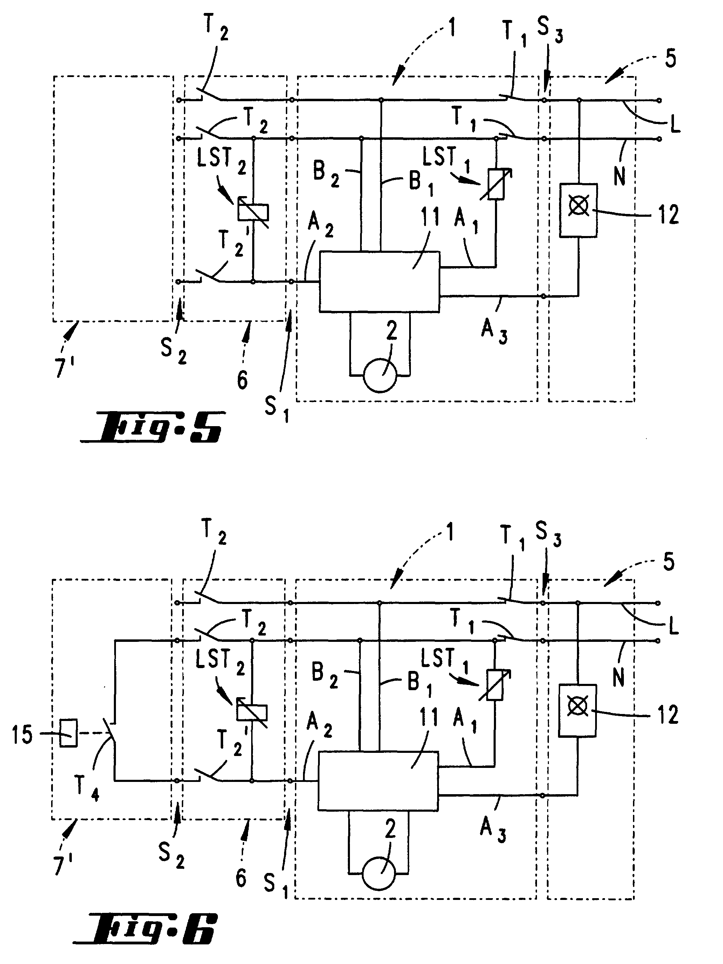

Die bereits angesprochene Leistungsstufe P1 regelt den Elektromotor 2 des Grundgerätes 1 auf eine Minimalleistung von bspw. ca. 100 Watt herunter. Diese Funktion kann z. B. eine sogenannte Parkfunktion sein. Diesbezüglich wird eine Ausbildung bevorzugt, welche in Fig. 4 in einem Prinzip-Schaltbild dargestellt ist. Hier weist das zu einem Bodenstaubsauger konfigurierte System ein Vorsatzgerät 7 auf mit einem Ruhestandssensor 15, welcher nach einem vorgegebenen Zeitintervall zu einem kurzschlußartigen, geringen Spannungsabfall bezüglich der Anschlußleitung A2 führt. Sinnbildlich ist dies in der Fig. 4 durch einen Schalter T4 realisiert, welcher in Abhängigkeit vom Zustand des Ruhestandssensors 15 schaltet. Dieser Schalter T4 verbindet im Bereich der Schnittstelle S2 die Anschlußleitung A2 mit der Leistungsleitung N. Durch Schalten der Anschlußleitung A2 gegen eine defireierte Netzleitung, hier die Leistungsleitung N, seitens des Vorsatzgerätes 7 bzw. des hier angeordneten Ruhestandssensors 15, z. B. bei einem Blockieren oder Parken einer Elektrobodenbürste oder dergleichen, wird das Grundgerät 1 unabhängig von der voreingestellten Leistung über den Leistungssteller LST2 in eine reduzierte Leistungsstufe, vorzugsweise minimale Leistung, geführt. In einer bevorzugten Ausgestaltung wird dieser Spannungsbereich nahe 0 Volt durch In-Serie-Schalten eines geeigneten Widerstandes zum Schalter-Steller-Modul (LST2) des Saugschlauches 6 für die Übertragung des Leistungsstellwertes nicht benutzt.

Dies bedeutet, daß in einer bevorzugten Ausbildung die Leistungsstellung P1 nicht vermittels des Leistungsstellers einstellbar ist. Hieraus ergibt sich für diese Funktion eine nochmals höhere Priorität gegenüber dem Leistungssteller LST2 im Saugschlauch 6, womit auch gewährleistet ist, daß diese Funktion auch im Handstaubsauger- und in dem noch zu beschreibenden Überboden-Betrieb ausgeführt werden kann. Alternativ oder kombinativ kann der Ruhestandsensor 15 auf weitere Schalter wirken, zur Unterbrechung der Stromversorgung des vorsatzgeräteseitigen Elektromotors 14 in einer Parkstellung oder dergleichen.

In der Fig. 5 ist eine Konfiguration gezeigt, bei welcher ein nicht-elektrisches Vorsatzgerät 7' adaptiert ist. Hier bewirkt eine Betätigung des Leistungsstellers LST2 lediglich eine Leistungssteuerung des Elektromotors 2.

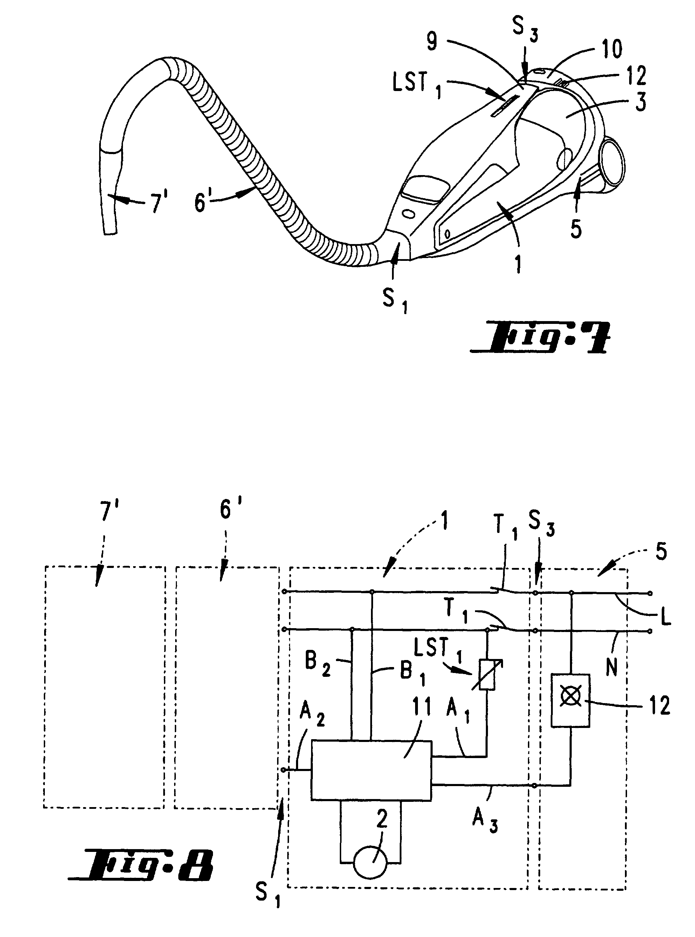

In Fig. 6 ist gleichfalls ein nicht-elektrisch betriebenes Vorsatzgerät 7' vorgesehen, welches jedoch im Unterschied zu der Konfiguration in Fig. 5 einen Ruhestandssensor 15 gemäß der bezüglich zu Fig. 4 beschriebenen Art aufweist. Durch Einschalten des Gerätes vermittels des Leistungsstellers LST2 und damit einhergehendem Schließen der Schalter T2 und T2' wird der Ruhestandssensor 15 und der durch ihn betätigbare Schalter T4 in den Steuerkreis eingeschleift. Auch hier führt der Ruhestandssensor 15 nach einem vorgegebenen Zeitintervall zu einem kurzschlußartigen, geringen Spannungsabfall bezüglich der Anschlußleitung A2, zur Leistungsreduzierung des Elektromotors 2 auf ca. 100 Watt.

Bei einem Abziehen des Elektro-Saugschlauches 6 wird automatisch der Leistungssteller LST1 im Grundgerät 1 aktiviert, so daß von dort aus in bekannter Weise geregelt werden kann. Die Abschaltung erfolgt immer durch Betätigung des Hauptschalters, welcher in den gezeigten Ausführungsbeispielen in dem Leistungssteller LST1 integriert ist (siehe Schalter T1). Wird die Fahrlafette 5 entfernt, so wird der Leistungssteller LST1 im Grundgerät 1 automatisch in die Stellung Elektrisch-Aus (Position X) geführt.

Fig. 7 zeigt eine Konfiguration, bei welcher das auf der Fahrlafette 5 angeordnete Grundgerät 1 mit einem nicht-elektrischen Saugschlauch 6' versehen ist. An dessen freien Ende ist ein Vorsatzgerät 7' angeordnet, welches gleichfalls nicht elektrisch betrieben werden kann, bspw. in Form einer Fugendüse. Die Steuereinheit 11 erkennt in dem System keinen weiteren Leistungssteller, so daß automatisch der grundgeräteseitige Leistungssteller LST1 aktiviert ist. Über diesen kann in üblicher Weise die Motorsteuerung erfolgen. Dieses Ausführungsbeispiel liegt außerhalb der Schutzumfang der Ansprüche.

Fig. 9 zeigt eine Konfiguration des Systemstaubsaugers in der Betriebsart Handstaubsauger. Hier ist das Grundgerät 1 mit einem Gerätestiel 4 versehen. Dieser Gerätestiel 4 besitzt am handgriffseitigen Ende eine Steckerbuchse zur Aufnahme einer mit einem Elektroanschlußkabel versehenen Steckdose 17. Das Anschlußkabel trägt das Bezugszeichen 18. Gerätestiel 4 und Grundgerät 1 sind über die Schnittstelle S3 elektrisch miteinander verbunden. An der Schnittstelle S1 des Grundgerätes 1 ist ein Vorsatzgerät 7 angeschlossen.

Weiter besitzt der Gerätestiel 4 einen in einem Handgriff 19 integrierten Leistungssteller LST3, welcher in gleicher Art ausgebildet ist, wie die zuvor beschriebenen Leistungssteller LST1 und LST2.

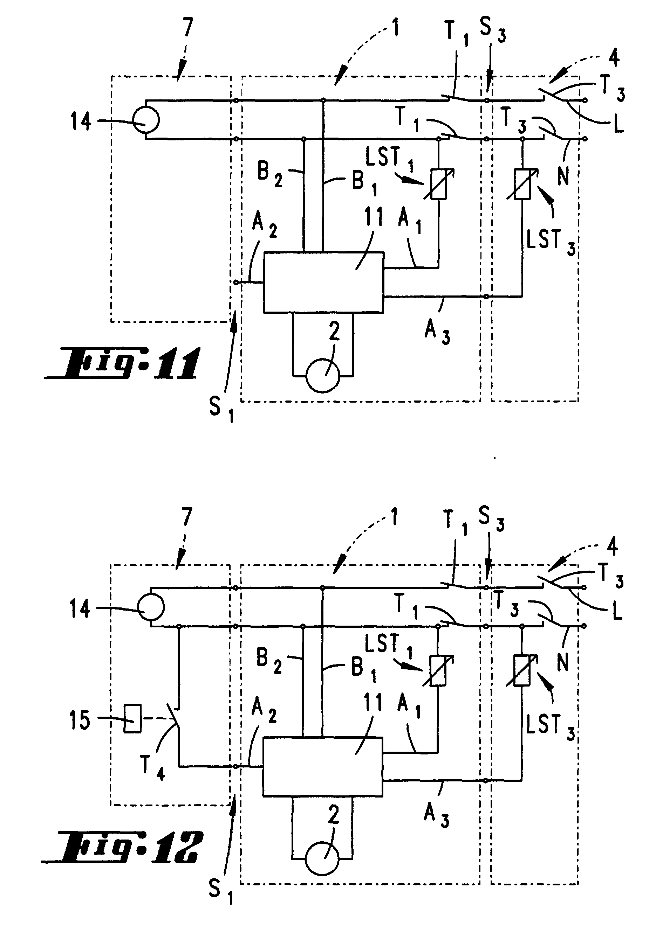

Durch Einschieben des Gerätestieles 4 in den grundgeräteseitigen Ausleger 9 wird der Leistungssteller LST1 in eine Maximalposition verlagert und dort verriegelt (siehe hierzu Fig. 10). Der in dem Handgriff 19 integrierte Leistungssteller LST3 steht über die Anschlußleitung A3 mit der Steuereinheit 11 in Verbindung. Dieser Leistungssteller LST3 besitzt somit, wie auch die anderen Leistungsteller, eine eigene Anschlußleitung. Anderendig ist der Leistungssteller LST3 mit der Leistungsleitung N verbunden. Weiter weist auch dieser, in die Leistungsleitungen L und N wirkende Schalter T3 auf, welche, elektrisch gesehen, vor dem Potentiometer-Element des Leistungsstellers positioniert sind (siehe hierzu Fig. 11). Diesem Schaltern T3 kommt in dieser Konfiguration die Aufgabe eines Hauptschalters zu.

Die Steuereinheit 11 registriert durch den zwischen der Anschlußleitung A3 und der Leistungsleitung N gemessenen Spannungsabfall den hinzugeschalteten Leistungssteller LST3, wodurch dieser aktiviert und der Leistungssteller LST1 im Grundgerät 1 deaktiviert wird.

Die Figuren 11 bis 14 zeigen eine Konfiguration mit einem elektrischen Vorsatzgerät 7, wobei in diesem ein einer Konfiguration gemäß Fig. 13 die Anschlußleitung A2 nicht benutzt wird. Dieses Vorsatzgerät 7 weist lediglich einen Elektromotor 14 auf. Die elektronische Steuerung erfolgt generell über den Leistungssteller LST3 im Gerätestiel 4.

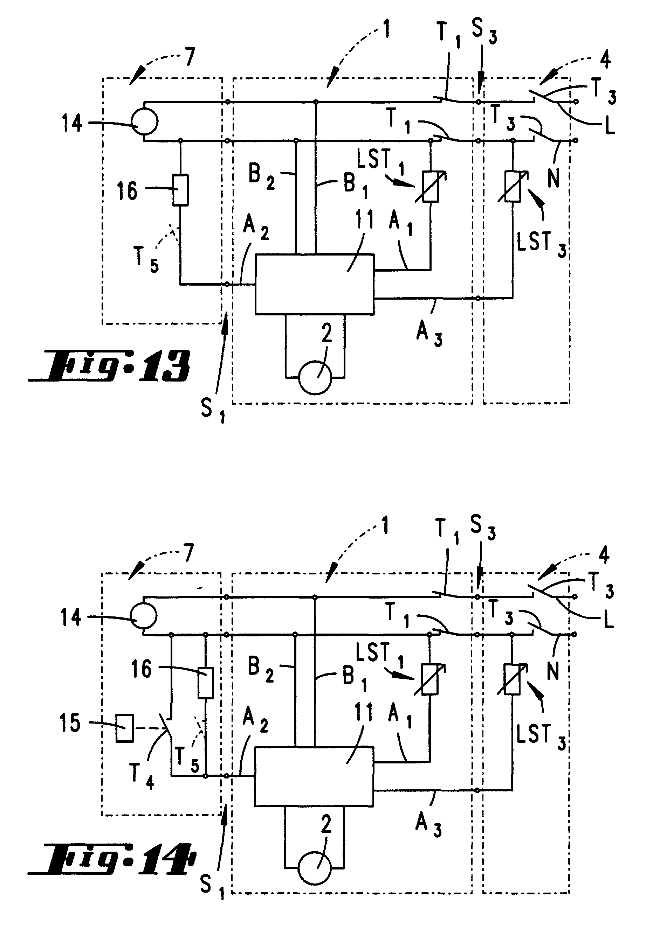

In Fig. 12 ist in dem Vorsatzgerät 7 ein wie zuvor beschriebener Ruhestandssensor 15 integriert, dessen Signal eine höhere Priorität besitzt als das des Leistungsstellers LST3. Der Elektromotor 2 des Grundgerätes 1 regelt also somit auf einen in der Steuereinheit 11 hinterlegten Leistungswert zurück, dies unabhängig von der voreingestellten Leistung über den Leistungssteller LST3.

Fig. 13 zeigt eine Konfiguration mit einem elektrischen Vorsatzgerät 7, welches eine automatische Leistungsreduzierung bewirkt. Hierzu ist zwischen der Anschlußleitung A2 und der Leistungsleitung N ein Kennungswiderstand 16 angeordnet. Dieser Kennungswiderstand 16 bewirkt einen vordefinierten Spannungsabfall, welcher außerhalb des Bereiches der durch die Leistungssteller erzielten Spannungsabfälle liegt. Somit besitzt dieser Kennungswiderstand 16 bevorzugt eine wiederum höhere Priorität als alle Leistungssteller. Bspw. kann ein derartiger Kennungswiderstand 16 in Vorsatzgeräten zum Einsatz kommen, welche aufgrund ihres bevorzugten Aufgabenbereiches nur bestimmte, reduzierte Leistungen benötigen. So ist bspw. vorgesehen, einen solchen Kennungswiderstand 16 in ein Frischer-Vorsatzgerät zu integrieren, welche Frischer-Vorsatzgeräte elektrisch angetriebene, rotierende Bürstenwalzen aufweisen zum Einbürsten von Reinigungslösungen in Teppichböden oder dergleichen. Hierbei ist erwünscht, daß der Saugmotor, d. h. der Elektromotor 2 im Grundgerät 1, elektronisch abgeschaltet wird. Bei Ansetzen dieses Vorsatzgerätes erkennt die Steuereinheit 11 den durch den Kennungswiderstand 16 bedingten Spannungsabfall und schaltet den Elektromotor 2 elektronisch aus. Diese Stellung entspricht der bereits erwähnten P0-Stellung des Leistungsstellers, womit bspw. Frischer-Vorsatzgeräte ohne Kennungswiderstand 16 auch einsetzbar sind.

Alternativ sind Vorsatzgeräte 7 denkbar, bei welchen die Frischer-Funktion per Tastendruck oder andere mechanische Verstellungen eingeschaltet werden kann. Dies ist in der Fig. 13 durch einen strichpunktiert dargestellten Schalter T5 symbolisiert.

Fig. 14 zeigt in einem Prinzip-Schaltbild die Konfiguration mit einem Vorsatzgerät 7, welches sowohl einen Ruhestandssensor 15 als auch einen Kennungswiderstand 16 aufweist. Hierbei kann es sich bspw. um ein Frischer-Vorsatzgerät handeln, welches vermittels des Ruhestandssensors 15 nach einem vorgegebenen Zeitintervall ein elektronisches Abschalten des Elektromotors 14 im Vorsatzgerät 7 bewirkt.

Weiter ist diese Konfiguration denkbar in Vorsatzgeräten 7, welche über den Kennungswiderstand 16 eine vorgegebene, reduzierte Leistung des Elektromotors 2 im Grundgerät 1 abrufen. Hierbei bewirkt ein alternativer Ruhestandssensor 15 ein elektronisches Abschalten des Elektromotors 2. Die Steuereinheit 11 vergibt hierbei dem Ruhestandssensor 15 bzw. dem hierdurch hervorgerufenen kurzschlußartigen, geringen Spannungsabfall eine höhere Priorität als dem Kennungswiderstand 16. Der Elektromotor 2 arbeitet mit einer, unabhängig von dem über den Leistungssteller eingestellten Wert, vermittels des Kennungswiderstandes 16 vordefinierten Leistung.

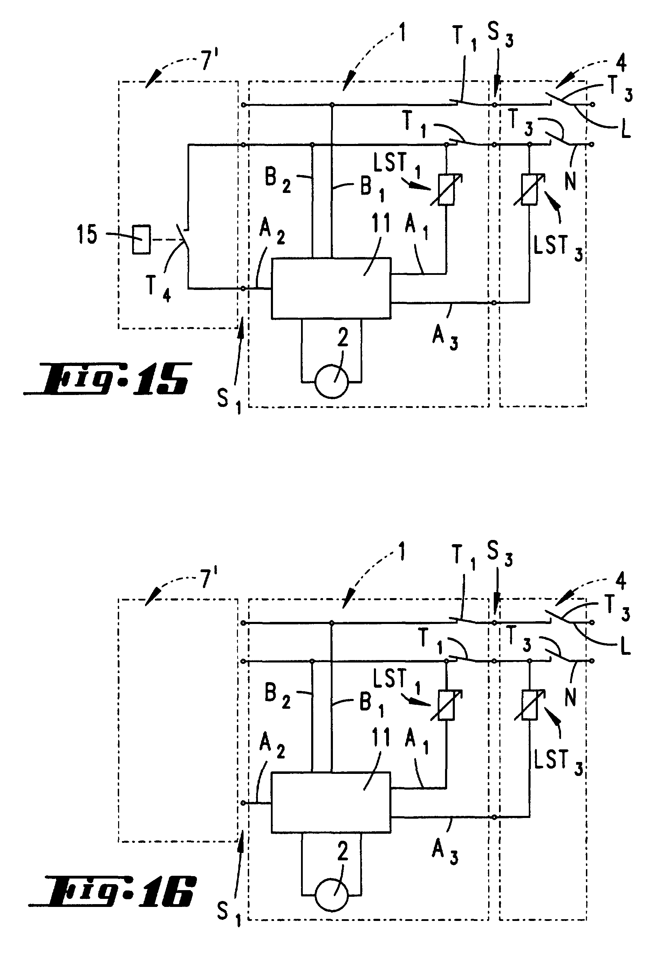

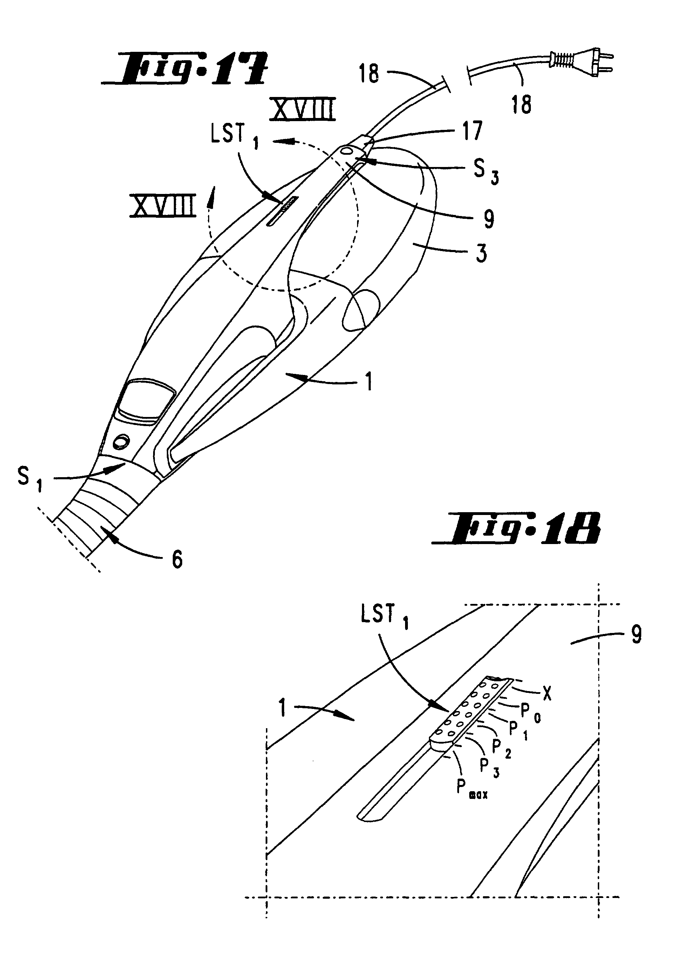

Die Figuren 15 und 16 zeigen eine Konfiguration, bei welcher das Vorsatzgerät 7' keine elektrisch antreibbaren Elemente besitzt. Lediglich in Fig. 15 ist in dem Vorsatzgerät ein Ruhestandssensor 15 integriert, welcher gleich dem zuvor beschriebenen Ausführungsbeispiel Einfluß auf die Leistungssteuerung des Elektromotors 2 hat.

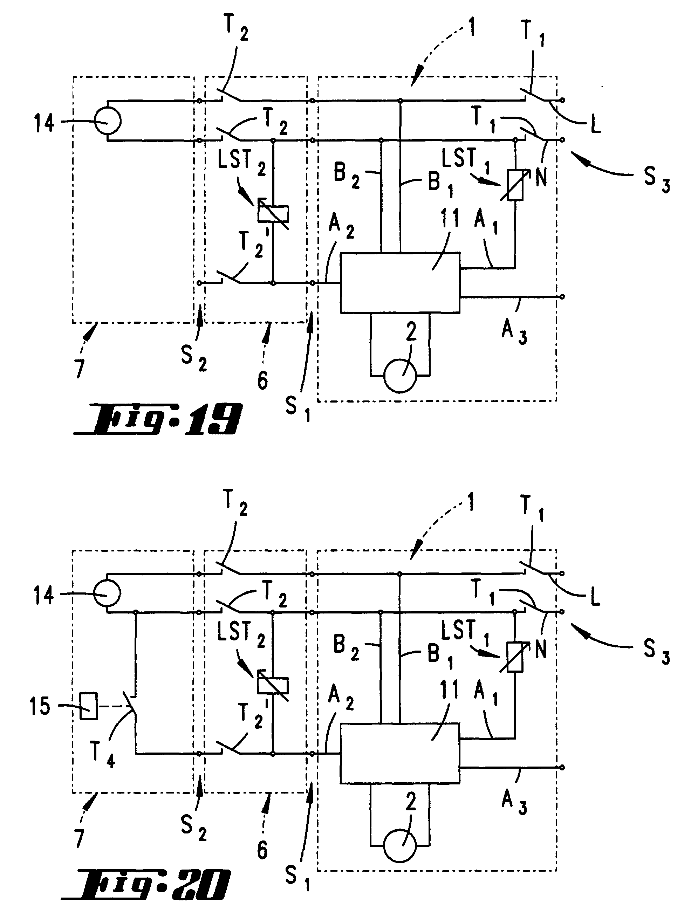

Eine weitere Betriebsart ist in der Fig. 17 dargestellt. Hier ist die Konfiguration des Systemstaubsaugers so gewählt, daß ein Überboden-Betrieb ermöglicht ist. Das Grundgerät 1 ist an seiner Schnittstelle S3 direkt mit dem die Steckdose 17 aufweisenden Anschlußkabel 18 versehen. Das Aufstecken dieses Anschlußkabels 18 hat keinerlei Einfluß auf die Stellung des Leistungsstellers LST1, womit dieser in einer Stellung Elektrisch-Aus (Position X) verbleibt. An der Schnittstelle S1 ist das Grundgerät 1 mit einem Elektro-Saugschlauch 6 versehen, an welchem direkt, ohne Zwischenschaltung eines Saugrohres 8, ein Vorsatzgerät 7 angeschlossen sein kann.

Der Leistungssteller LST1 dient unabhängig von den gewählten Vorsatzgeräten und unabhängig davon, ob ein elektrischer oder nicht-elektrischer Saugschlauch 6 bzw. 6' verwendet wird, als Hauptschalter (Schalter T1). Ist ein elektrischer Saugschlauch 6, wie in Fig. 19 dargestellt, adaptiert, so ist auch in dieser Konfiguration der Leistungssteller LST2 im Saugschlauch 6 durch die Steuereinheit 11 aktiviert. Dem Leistungssteller LST1 im Grundgerät kommt nur die Aufgabe eines Hauptschalters zu. Die Leistungssteuerung erfolgt über den Leistungssteller LST2 im Saugschlauch 6.

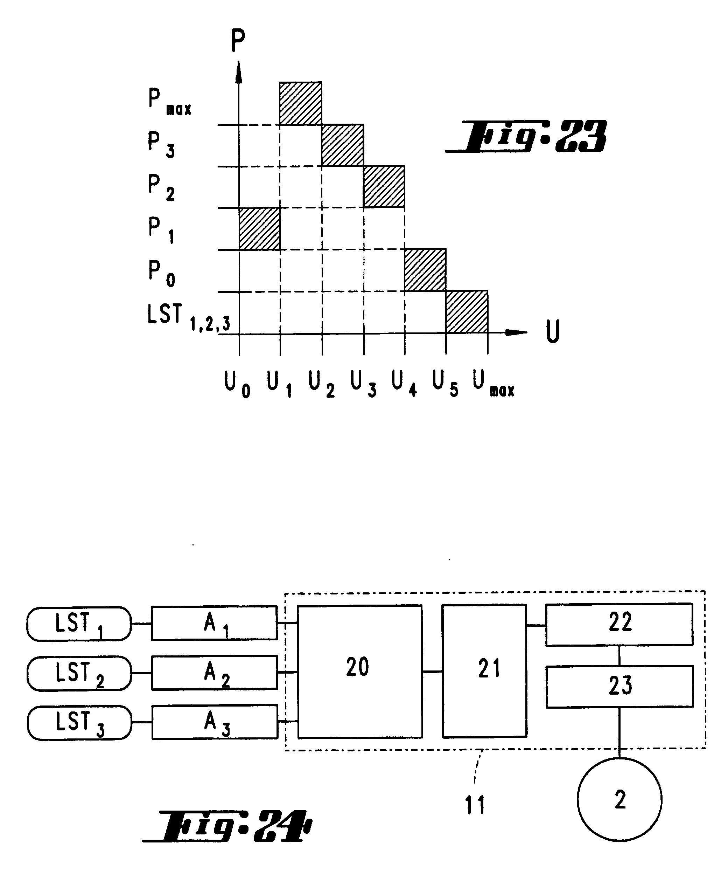

Fig. 20 zeigt eine Konfiguration mit einem elektrischen Vorsatzgerät 7, welches einen Ruhestandssensor 15 aufweist. Auch hier gilt, daß dieser Ruhestandssensor 15 eine höhere Priorität hat als die in dem System vorhandenen Leistungssteller.

Bei Einsatz eines nicht-elektrischen Vorsatzgerätes 7' erfolgt die Leistungssteuerung des Elektromotors 2 über den gesamten, freigegebenen Leistungswert über den Leistungssteller LST2 im Saugschlauch 6.

Ist hingegen ein nicht-elektrischer Saugschlauch 6' vorgesehen, so erfaßt die Steuereinheit 11 lediglich das Vorhandensein des in dem Grundgerät 1 integrierten Leistungsstellers LST1, womit diesem sowohl die Funktion eines Hauptschalters als auch die Funktion eines Leistungsstellers zur Regelung des Elektromotors 2 zukommt.

Es bleibt festzuhalten, daß die Auswertung der Leistungssteller es zuläßt, daß jeder Leistungssteller nach einer individuellen Kennlinie arbeitet, d. h., daß der Leistungssteller LST2 im Saugschlauch 6 z. B. einen höheren Leistungsbereich des Elektromotors 2 ansteuern kann als der im Gerätestiel 4. Die Leistungssteller sind als Potentiometer ausgebildet oder als Schiebeschalter, über die Widerstände geschaltet werden. Die Leistungsstellwerte bzw. Widerstandswerte können die Phasen-Anschnittsteuerung sowohl direkt als analoger Spannungspegel bedienen als auch indirekt über eine Decodierstufe. In letzterem Fall kann das analoge Signal der Potentiometer in ein wertediskretes Signal umgewandelt werden, d. h. es können nur einige in der Steuerung hinterlegte Phasen-Anschnittwinkel und damit Leistungsstufen eingestellt werden. Dieses Verfahren eignet sich auch für den Fall, daß die Leistungssteller als Schiebeschalter ausgeführt werden. In diesem Fall sorgt die Decodierstufe wiederum dafür, daß die hinterlegten Leistungsstufen angefahren werden. Hierdurch wird eine sehr hohe Präzision in den Leistungsstufen erreicht, da die auf der Übertragungsstrecke auftretenden Störungen innerhalb bestimmter Grenzen tolerierbar sind.

In Fig. 23 ist schematisch der Zusammenhang zwischen Spannungspegel und Motorleistung über die Codierung der Leistungsstufen dargestellt. Zur Übertragung der Leistungsstellwerte werden Spannungspegel verwendet, wobei jedem Spannungspegel genau eine Funktion zugeordnet ist. Die Spannungspegel sind in den gezeigten Ausführungsbeispielen für alle drei Leistungssteller LST1 bis LST3 gleich. Die Spannung U stellt die Betriebsspannung für die Signalleitungen dar. Diese Betriebsspannung beträgt bevorzugt 7,5 Volt. Zur Erzielung eines gleichen Störabstandes innerhalb der Leistungsstufen besitzen die Spannungsbereiche gleiche Betrag. Der untere Spannungsbereich U0 nahe 0 Volt ist mit der Funktion Leistungsreduzierung P1 vom Vorsatzgerät 7 oder auch vom Leistungssteller belegt. Die Spannungsbereiche nahe U1, U2 und U3 sind mit der Funktion der verschiedenen Leistungsstufen, bspw. 300 Watt, 550 Watt und 750 Watt, von den Leistungsstellern LST1 bis LST3 belegt. Der Spannungsbereich nahe U4 wiederum ist durch die Funktion Elektronisch-Aus (P0) belegt, welche entweder durch ein geeignetes Vorsatzgerät 7 bzw. 7' (mit Ruhestandssensor 15) oder auch über den aktivierten Leistungssteller LST1 bis LST3 erreicht werden kann. Der Spannungsbereich zwischen U5 und U6, d. h. nahe der Maximal-Spannung dient der Funktion zur Erkennung der zugeschalteten Leistungssteller.

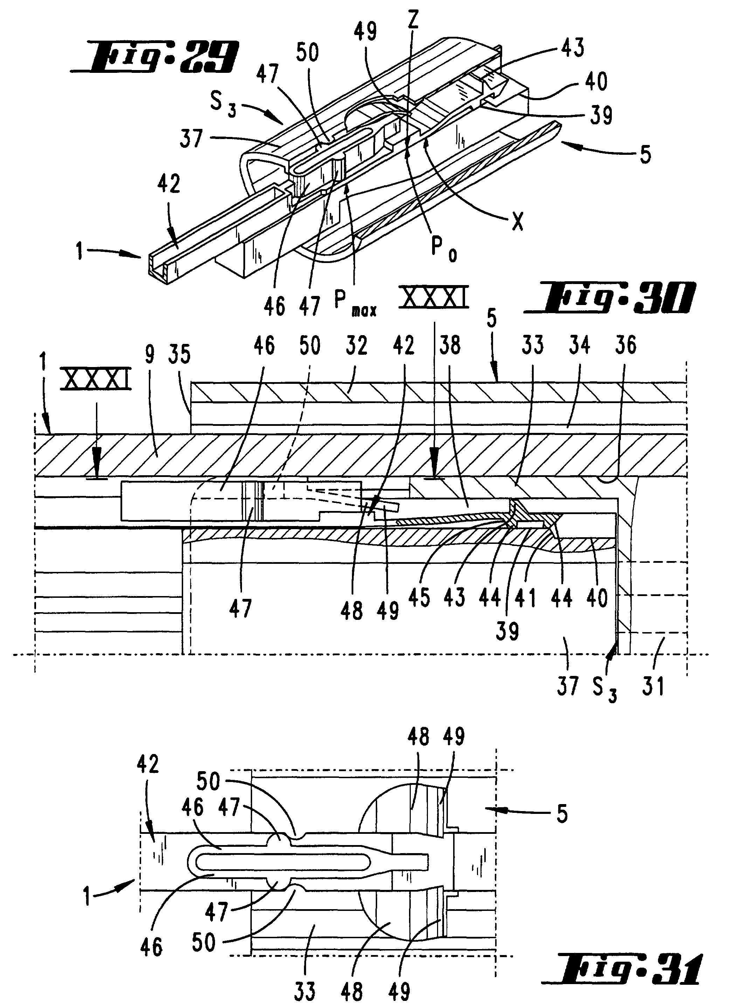

Weiter zeigt Fig. 24 ein Block-Schaltbild der elektronischen Steuerung. Es ist zu erkennen, daß die einzelnen Leistungssteller LST1 bis LST3 über jeweils eigene Anschlußleitungen A1 bis A3 auf die Steuereinheit 11 wirken. Diese Steuereinheit 11 beinhaltet einen Prioritätsdecoder 20, welcher die zugeschalteten Leistungssteller ermittelt und nach einer vorgegebenen Prioritätenfolge einen dieser Leistungssteller aktiviert. An diesem Prioritätsdecoder 20 anschließend ist eine Decodierstufe 21 implementiert, welche infolge des durch die Decodierstufe 20 erkannten, zu aktivierenden Leistungsstellers, entsprechende Funktionen, insbesondere Leistungswerte freigibt oder diese sperrt. Diesbezüglich wurde bereits erwähnt, daß die Maximal-Leistung P Max bei Verwendung eines Saugschlauches 6 erreicht werden soll. Dies bedingt daher die Erkennung des Leistungsstellers LST2 des Saugschlauches 6. Über eine Zündwinkeltabelle 22 und eine Phasen-Anschnittsteuerung 23 wird aufgrund der vorliegenden Werte der Elektromotor 2 gesteuert. Weiter wird die Maximalleistung durch den Leistungssteller LST1 erreicht, sofern das Grundgerät im Überbodenbetrieb ohne elektrischen Saugschlauch betrieben wird.

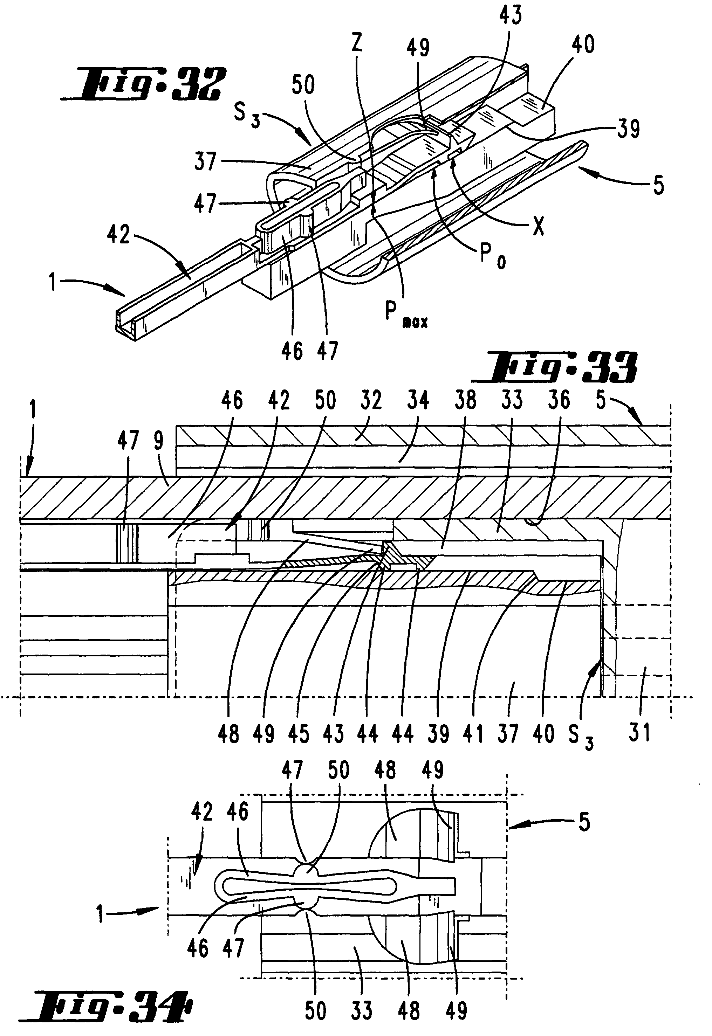

Die Fig. 25 und 26 zeigen zwei Ausführungsbeispiele zur Ansteuerung der Glimmlampe 12 in der Betriebsart Bodenstaubsauger. In beiden Ausführungsformen ist für die Betriebsanzeige eine Glimmlampe gewählt, welche über eine Diode D1 und einen Vorwiderstand W1 an die Steuer- bzw. Leistungsleitung L angeschlossen ist.

In der in Fig. 25 gezeigten Ausführungsform fließt der Glimmlampenstrom über eine in der Steuereinheit 11 angeordneten Diode D2 an eine negative Betriebsspannung VSS der Elektronik, welche negative Betriebsspannung VSS beispielsweise -8 Volt betragen kann. Zu der Diode D2 ist ein Parallelwiderstand W2 geschaltet. Der Anschluß zwischen der Steuereinheit 11 bzw. der Parallelanordnung von Diode D2 und Widerstand W2 und der Glimmlampe erfolgt über die bereits erwähnte und näher beschriebene Anschlußleitung A3 unter Zwischenschaltung eines in der Steuereinheit 11 integrierten Widerstandes W3.

Durch die Belastung mit der Glimmlampe wird das Potential am Eingang 25 der Steuereinheit 11 im Bereich der Anschlußleitung A3 auf einen Wert angehoben, welcher bedingt durch die Diode und den Widerstand W3 um mindestens 0,7 Volt negativer ist als die negative Betriebsspannung VSS. Der Spannungsbereich zur Leistungsstellung zwischen 0 Volt und negativer Betriebsspannung VSS bleibt demzufolge unbeeinflußt von der Glimmlampe.

Bei der in Fig. 26 gezeigten zweiten Ausführungsform wird die gleiche Konstellation dadurch erreicht, daß eine Zenerdiode ZD1 zur Bezugs- bzw. Leistungsleitung N geschaltet wird, deren Zenerspannung größer ist als der Betrag der negativen Betriebsspannung VSS. Auch hierdurch bleibt gewährleistet, daß der Spannungsbereich zur Leistungsstellung nicht erreicht werden kann.

Durch eine der zuvor beschriebenen, gewählten Schaltungen wird die Glimmlampe nunmehr jedesmal dann eingeschaltet, sobald der Netzschalter T1 geschlossen ist. Die Verwendung einer Glimmlampe ist besonders günstig, da hierbei sehr kleine Ströme fließen.

Durch die Betriebsanzeige 12 wird dem Benutzer angezeigt, daß das Gerät betriebsbereit ist und unter Spannung steht. Besonders wenn das Gerät mit einem Saugschlauch 6 betrieben wird, kann ein Zustand erreicht werden, bei welchem das Grundgerät 1 elektronisch abgeschaltet ist. Die Grundgeräteelektronik ist hingegen weiterhin aktiv. Nur wenn die Betriebsanzeige 12 leuchtet, kann das Gerät auch über den Saugschlauch 6 eingeschaltet werden.

Die in den Fig. 25 und 26 gezeigten Lösungen zeichnen sich insbesondere durch die Einfachheit der Schaltung aus, da nur sehr wenige diskrete Bauelemente benötigt werden. Außerdem wird nur eine Anschlußleitung A3 zur Erfüllung von zwei Funktionen verwendet. Hierdurch ergeben sich wirtschaftliche Vorteile bei minimalem Bauvolumen.

In den gezeigten und beschriebenen Ausführungsformen sind jeweils drei Anschlußleitungen vorgesehen, zwei Leistungsleitungen und eine Steuerleitung. Es ist jedoch auch denkbar vier Anschlußleitungen vorzusehen, wobei eine zusätzliche zweite Steuerleitung bspw. wahlweise eine spezielle Funktion in einem Vorsatzgerät auslösen kann, wie bspw. eine Umschaltfunktion in einer Düse, eine Beeinflussung der Vorsatz-Motorleistung oder die Aktivierung einer Funktion durch ein elektrisches Signal, oder ebenfalls zur Übertragung eines Signals zum Grundgerät dienen kann.

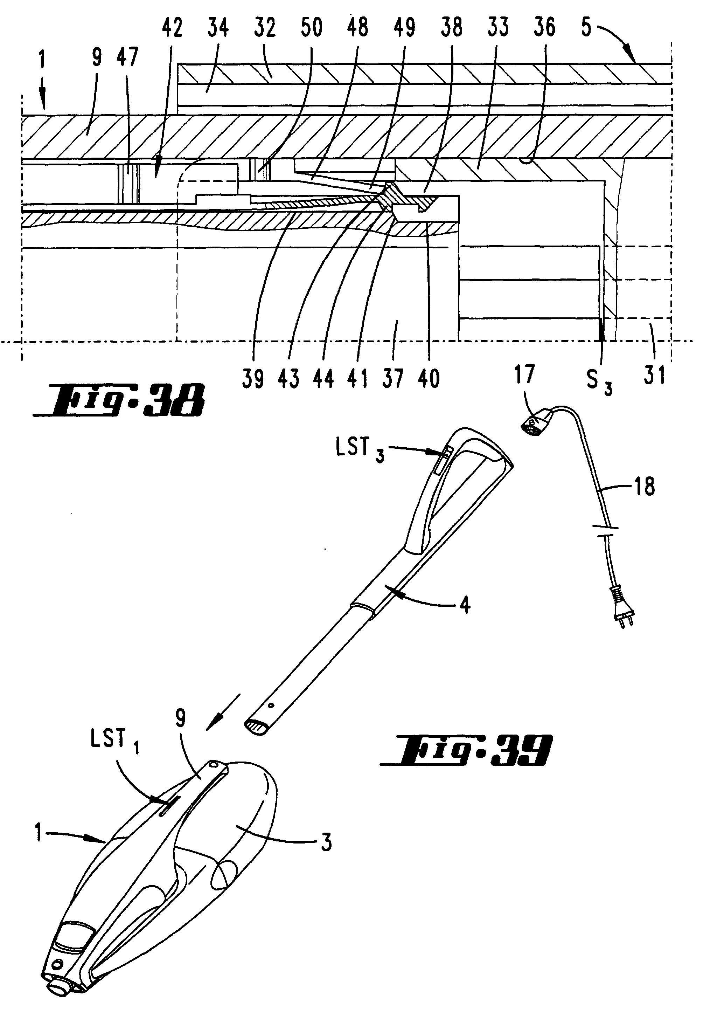

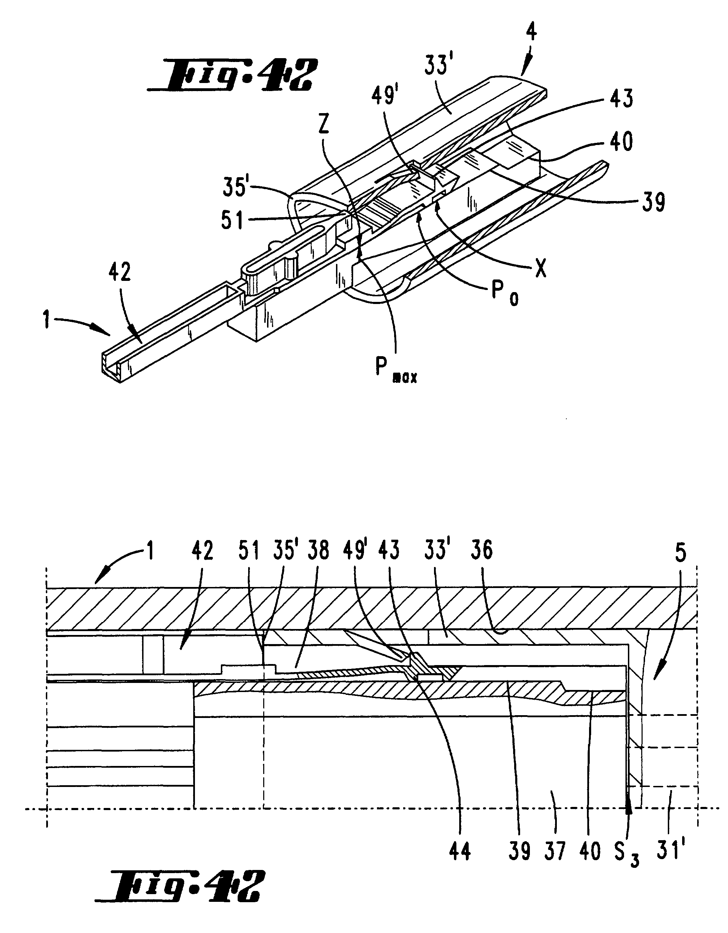

In den Fig. 27 bis 38 ist die Mechanik zur automatischen Verlagerung des grundgeräteseitigen Leistungsstellers LST1 in die Elektrisch-Ein-Position im Zuge des Aufschiebens des Grundgerätes 1 auf die Fahrlafette 5 dargestellt.

Das frei auskragende Ende 30 des lafettenseitigen Auslegerarmes 10 beinhaltet eine starre Steckdose 31. Wie bspw. aus der Schnittdarstellung in Fig. 30 zu erkennen, ist das freie Ende 30 des Auslegerarmes 10 im wesentlichen rohrartig ausgebildet, wobei dieser rohrartige Abschnitt 32 eine gleichfalls rohrartige Steckerführung 33 umfaßt, unter Belassung eines freien Ringraumes 34 zwischen der Mantelwandung 32 des auskragenden Endes 30 und der Außenwandung der Steckerführung 33.

Mit einem Abstand zur Mündung 35 ist die Steckdose 31 im Anschluß an die Steckerführung 33 positioniert.

Die Steckdose 31 weist drei Steckeraufnahmen auf. Diese sind leitend ausgebildet und rückwertig der Steckdose 31 an eine durch den Auslegerarm 10 verlaufende Anschlußleitung angeschlossen.

Der Ausleger 9 des Grundgerätes 1 weist eine Steckaufnahme 36 auf, welche entsprechend dem frei auskragenden Ende 30 des lafettenseitigen Auslegerarmes 10 rohrartig ausgebildet ist. Die Steckaufnahme 36 ist hierbei in einem frei auskragenden Endbereich des Auslegers 9 positioniert, wobei ein Mündungsquerschnitt der Steckaufnahme 36 im wesentlichen dem Mündungsquerschnitt des Ringraumes 34 des lafettenseitigen, frei auskragenden Endes 30 entspricht.

In der Steckaufnahme 36 ist ein Stecker 37 angeordnet, welcher über einen Steckersockel in der Steckaufnahme 36 befestigt ist. Letzterer weist einen Querschnitt auf, welcher dem Hohlprofilquerschnitt des Auslegers 9 bzw. der Steckaufnahme 36 entspricht.

Der Stecker 37 ragt von dem Sockel ausgehend frei in den Raum der Steckaufname 36, wozu der Stecker 37 querschnittsverkleinert ist gegenüber dem Steckersockel bzw. der Innenwandung der Steckaufnahme 36.

Bedingt durch die frei kragende Ausgestaltung des Stekkers 37 ergibt sich zwischen der Steckaufnahme-innenwandung und der Außenwandung des Steckers 37 ein ringförmiger Freiraum 38.

Auf dem freien Stirnende des Steckers 37 sind Flach- bzw. Rundstecker frei kragend in den Steckeraufnahmeraum positioniert. Diese Flach- bzw. Rundstecker sind elektrisch leitend und rückwärtig im Bereich des Stekkers 37 bzw. dessen Sockels mit entsprechenden Anschlußleitungen, welche innerhalb des Grundgerätegehäuses zur Elektronik führen, verbunden. Hierbei dienen Flachstekker zum Spannungsanschluß des Gerätes. Ein Rundstecker dient zur Signalübertragung und ist über die Anschlußleitung A3 mit der Auswerteelektronik 11 verbunden.

Bezüglich dieser elektrischen Steckverbindung wird nochmals auf die nicht vorveröffentlichte Druckschrift DE-A-196 17 066 verwiesen.

Auf der dem grundgeräteseitigen Leistungssteller LST1 zugewandten Oberseite ist der Stecker 37 mit einer Stufenbahn 39 versehen. Im Bereich des freien Endes des Steckers bildet diese eine einwärts zurückspringende Stufe 40 aus, wobei der Übergang zu dieser Stufe 40 mit einer Schrägfläche 41 versehen ist.

Auf dieser Stufenbahn 39 ist ein mit dem Leistungssteller LST1 verbundener Fernbetätigungsfortsatz 42 längsverschiebbar gelagert. Bspw. kann dieser mit dem Leistungssteller LST1 materialeinheitlich gebildet sein. Alternativ ist auch eine Anordnung denkbar, bei welcher der Fernbetätigungsfortsatz 42 an dem Betätigungsvorsprung des Leistungsstellers LST1 angelenkt ist.

Ein endseitiger, d.h. dem Leistungssteller LST1 abgewandter Abschnitt des Fernbetätigungsfortsatzes 42 ist ausfederbar ausgebildet, mit einem oberseitigen, d.h. auf der dem Stecker 37 abgewandten Seite, angeordneten Schiebenocken 43. Unterseitig ist der freie Endbereich des Fernbetätigungsfortsatzes 42 mit Stützstegen 44 versehen, wobei zumindest der innere Stützsteg 44 eine mit der Schrägfläche 41 der Stufe 40 korrespondierende Auflaufschräge 45 besitzt.

In einem dem Ausfederbereich des Fernbetätigungsfortsatzes 42 vorgelagerten Bereich sind quer zur Verlagerungsrichtung des Leistungssteller LST1, bzw. des Fernbetätigungsfortsatzes 42 elastisch ausfedernde Längswände 46 vorgesehen, welche wandaußenseitig jeweils einen Schiebenocken 47 tragen.

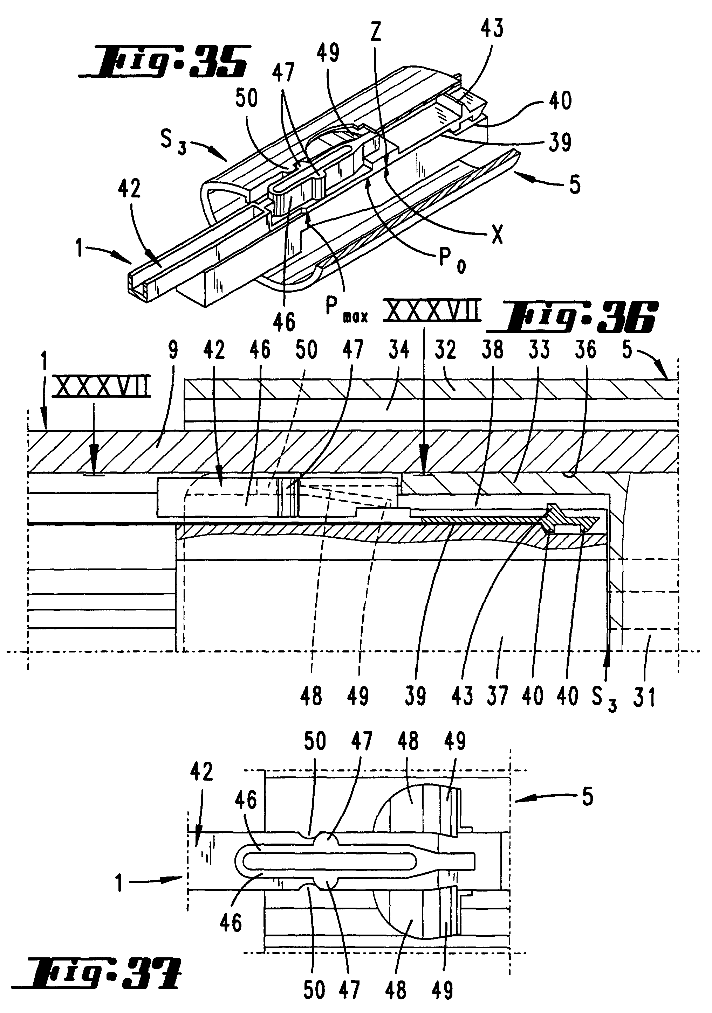

In den partiell aufgebrochenen, perspektivischen Darstellungen der Fig. 28, 29, 32 und 35 sind zur besseren Übersicht der Abschnitt 32 des lafettenseitigen Auslegerarmes 10 und der Ausleger 9 des Grundgerätes 1 nicht dargestellt. Weiter ist auch die Stufenbahn 39 anhand eines schematisch dargestellten Steckerteiles wiedergegeben.

Die Steckerführung 33 der Steckdose 31 besitzt einen als Zunge 48 ausgebildeten Rückhaltevorsprung 49, wobei dieser aus der Steckerführung 33 frei gestanzt ist und in das Innere der Steckerführung 33 ragt. Das freie Ende des Rückhaltevorsprunges 49 weist hierbei in Richtung auf die Steckdose 31.

In Fig. 28 ist eine Zwischenstellung im Zuge des Einschiebensdes grundgeräteseitigen Auslegers 9 in den lafettenseitigen Auslegerarm 10 dargestellt. Es ist zu erkennen, daß das freie Ende des Fernbetätigungsfortsatzes 42 mit seinen Stützstegen 44 in der Stufe 40 der Stufenbahn 39 einliegt. Die seitlich abragenden Schiebenocken 47 treten in einem entsprechend freigelassenen Bereich der Steckerführung 33 gegen nach innen weisende Rückhaltenocken 50.

In den perspektivischen Darstellungen der Fig. 28, 29, 32 und 35 sind zur Verdeutlichung der Relativverlagerung von Fernbetätigungsfortsatz 42 zur Stufenbahn 39 Markierungen dargestellt. In Fig. 28 zeigt der Zeiger Z des Fernbetätigungsfortsatzes 42 auf die, die Elektrisch-Aus-Position darstellende Markierung X.

Ein weiteres Einschieben des grundgeräteseitigen Auslegers 9 in den lafettenseitigen Auslegerarm 10 zum Schließen der Schnittstelle S3 erfolgt zunächst bis zur Abstützung des Stecker 37 an der Steckdose 31 im Bereich der Steckerführung 33. Im Zuge eines weiteren Einschiebens wird, bedingt durch die Abstützung der Schiebenocken 47 an den Rückhaltenocken 50, der Fernbetätigungsfortsatz 42 und somit der mit diesem verbundene Leistungssteller LST1 zurückgehalten, womit in der eingeschobenen Endposition gemäß den Fig. 29 bis 31 der Leistungssteller LST1 in die Elektrisch-Ein-Position verfahren ist. Diese Stellung ist auch im Bereich der Steckverbindung erkennbar. Der Zeiger Z steht hier der Markierung P0 gegenüber (siehe hierzu Fig. 29). Durch die Relativverlagerung des Fernbetätigungsfortsatzes 42 zum Stecker 37 ist auch das mit dem Schiebenocken 43 versehene freie Ende des Fernbetätigungsfortsatzes 42 aus dem Bereich der Stufe 40 der Stufenbahn 39 herausgezogen, was eine höhenmäßige Verlagerung in den Bereich des Freiraumes 38 zur Folge hat. Der wandungsschwächere Bereich des Fernbetätigungsfortsatzes 42 weicht hierbei federnd aus.

Durch diese Ausgestaltung ist in einfachster Weise eine automatische Verlagerung des Leistungssteller LST1 in die Elektrisch-Ein-Position bei Aufschieben des Grundgerätes 1 auf die Fahrlafette 5 gegeben. Aus dieser Stellung heraus kann der Leistungssteller LST1 manuell bis in die Stellung P-Max verstellt werden (vgl. hierzu Fig. 32 und 33).

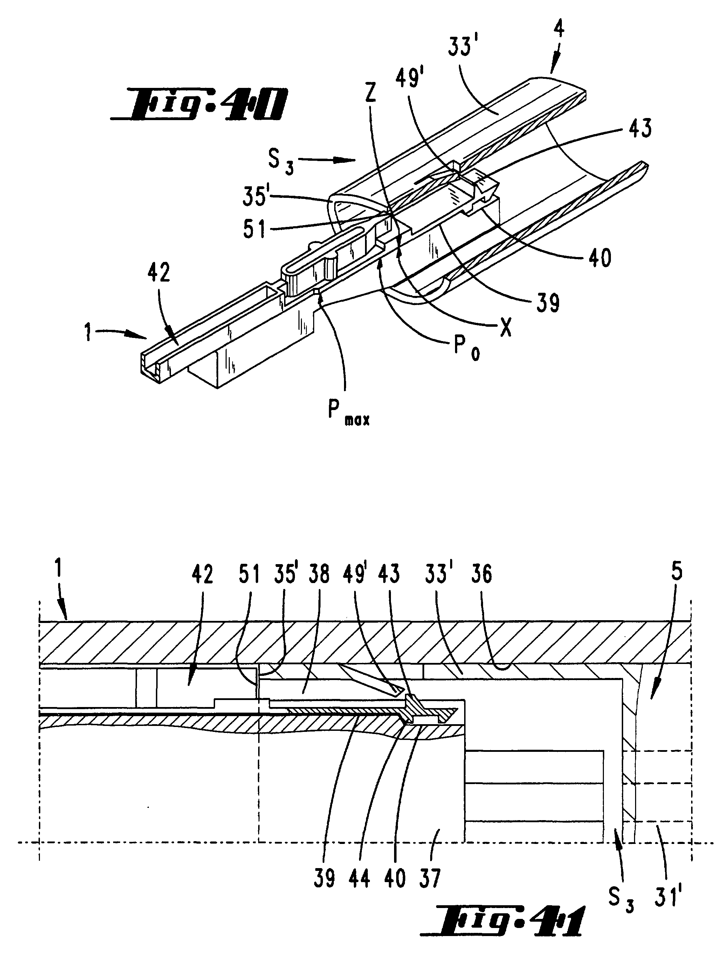

Weiter kann aus der Elektrisch-Ein-Position der Bediener auch den Leistungssteller LST1 in die Elektrisch-Aus-Position verlagern. Hierzu wird der Fernbetätigungsfortsatz 42 über den Leistungssteller LST1 bzw. dessen Betätigungshandhabe derart verlagert, daß nach Einfedern der Schiebenocken 47 diese von den Rückhaltenocken 50 des lafettenseitigen Auslegerarmes 10 überlaufen werden, um hiernach hinter den Rückhaltenocken 50 wieder elastisch auszufahren. Diese Stellung ist in den Fig. 35 bis 37 dargestellt. Es ist zu erkennen das der fortsatzseitige Zeiger Z der Markierung X, welche die Elektrisch-Aus-Position definiert gegenübersteht. Das freie Ende des Fernbetätigungsfortsatzes 42 liegt in der Stufe 40 ein, wobei die Rückstellung bedingt durch die federnde Ausgestaltung des Fortsatzendbereiches selbsttätig erfolgt.

Wie bereits erwähnt soll bei einem Abziehen des Grundgerätes 1 von der Fahrlafette 5 der Leistungssteller LST1 selbsttätig in die Elektrisch-Aus-Position verlagert werden. Dies ist durch den fortsatzseitigen Schiebenokken 43 gelöst, welcher bei einem Herausziehen des grundgeräteseitigen Auslegers 9 aus dem Auslegerarm 10 gegen den Rückhaltevorsprung 49 tritt, sofern der Leistungssteller LST1 nicht bereits in die gewünschte Position zurückverlagert wurde, da in einer solchen Situation das freie Ende des Fernbetätigungsfortsatzes 42 aus der Stufe 40 heraus nach oben in den Freiraum 38 verlagert ist. Somit tritt der Schiebenocken 43 in den Bereich des Rückhaltevorsprunges 49. Der Fernbetätigungsfortsatz 42 wird solange durch diese Abstützung zurückgehalten, bis das freie Ende federunterstützt in die Stufe 40 abfällt. Hiernach kann der Schiebenocken 43 den Rückhaltevorsprung 49 unterlaufen.

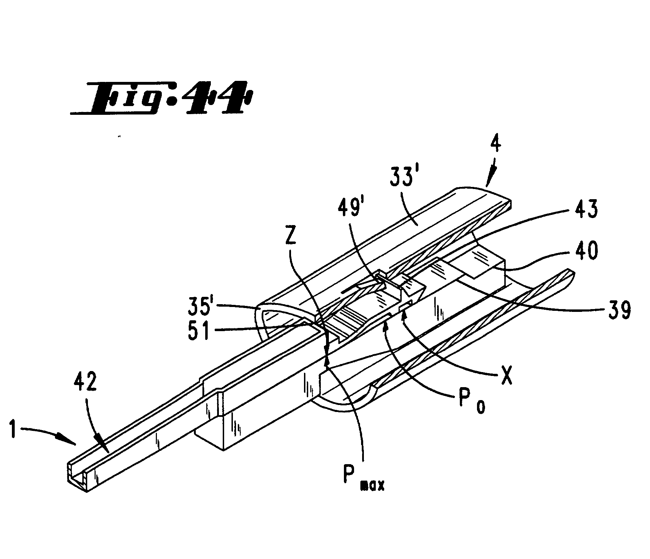

Die Fig. 39 bis 43 betreffen die Steckverbindung zwischen dem Grundgerät 1 und dem in den Ausleger 9 einzuschiebenden Gerätestiel 4.

Der Gerätestiel 4 ist im Bereich des dem Grundgerät 1 zugeordneten Endes ähnlich dem Kupplungsbereich des lafettenseitigen Auslegerarmes 10 gebildet. Hier ist auch mit Abstand zu dem Mündungsbereich 35' eine Steckdose 31' vorgesehen, von welcher aus sich zur Mündung hin eine Steckerführung 33' erstreckt. Diese Steckerführung 33' besitzt gleichfalls einen in das Innere weisenden, als Zunge ausgebildeten Rückhaltevorsprung 49'.

Im Zuge des Einschiebens des freien Endes des Gerätestieles 4 in die im Ausleger 9 ausgebildete Steckaufnahme 36 tritt die Stirnwand der Steckerführung 33 im Mündungsbereich 35' gegen eine stirnseitige Schiebewandung 51 des Fernbetätigungsfortsatzes 42, was eine Relativverlagerung des Fernbetätigungsfortsatzes 42 und somit des Leistungsstellers LST1 zu der auf dem Stecker 37 ausgebildeten Stufenbahn 39 bewirkt. Die Einschubbewegung ist anschlagbegrenzt derart, daß der Stecker 37 gegen die Stirnwandung der Steckdose 31 tritt unter Bildung der elektrischen Schnittstelle S3. In dieser Endstellung ist der Fernbetätigungsfortsatz 42 und somit der Leistungssteller LST1 soweit verlagert, daß die Maximalstellung P-Max eingestellt ist.

Auch hier ist durch die Relativverlagerung das freie Ende des Fernbetätigungsfortsatzes 42 aus der Stufe 40 verlagert, womit der in das Innere ragende Rückhaltevorsprung 49 in den Verschiebeweg des Schiebenockens 43 tritt. Dies hat zur Folge, daß bei einem Abziehen des Gerätestieles 4 der Fernbetätigungsfortsatz durch die Abstützung des Schiebenockens 43 an dem Rückhaltevorsprung 49 zurückgehalten wird, was ein Zurückverlagern des Leistungsstellers LST1 in die Elektrisch-Aus-Position zur Folge hat. In dieser gewünschten Stellung fällt der Endbereich des Fernbetätigungsfortsatzes 42 in die Stufe 40 der Stufenbahn 39 ein, womit der Schiebenocken 43 von dem Rückhaltevorsprung 49 überlaufen werden kann.

In Fig. 44 ist eine alternative Ausführungsform des Fernbetätigungsfortsatzes 42 dargestellt. Dieser weist lediglich einen Schiebenocken 43 auf. Die im wesentlichen senkrecht zum ersten Schiebenocken 43 ausweichbaren Schiebenocken 47 sind nicht berücksichtigt. Dieser Fernbetätigungsfortsatz 42 hat in der Konfiguration Handstaubsauger die gleiche Funktion wie in der zuvor beschriebenen Ausführungsform. Lediglich in der Konfiguration Bodenstaubsauger ergibt sich der Unterschied, daß bei einem Aufstecken des Grundgerätes auf die Fahrlafette 5 keine Verlagerung des Leistungssteller LST1 erfolgt.

## Patentansprüche

1. Mittels eines Elektromotors (2) betriebener Staubsauger,insbesondere Staubsaugersystem mit einem Grundgerät (1), einem Saugschlauch (6), einem Gerätestiel (4) und verschiedenen, wahlweise anzuschließenden Vorsatzgeräten (7), wobei der Elektromotor (2) hinsichtlich seiner Leistung steuerbar ist und weiter die Steuerung über unterschiedliche voneinander getrennte Leistungssteller, vorzugsweise drei Leistungssteller (LST1 bis LST3) durchführbar ist, **dadurch gekennzeichnet, daß** die Leistungssteller (LST1 bis LST3) über eine jeweils eigene Anschlußleitung (A1 bis A3) mit einer Steuereinheit (11) verbunden sind und daß bei mehrfach verbundenen Leistungsstellern (LST1 bis LST3) eine vorgegebene Prioritätsfolge zur Aktivierung nur eines Leistungsstellers führt, wobei diese Prioritätsfolge in der Steuereinheit (11) festgelegt ist.

2. Staubsauger nach Anspruch 1 **dadurch gekennzeichnet, daß** alle Leistungssteller (LST1 bis LST3) zu etwa einem gleichen Spannungsabfall in der jeweiligen Anschlußleitung (A1 bis A3) führen.

3. Staubsauger nach einem oder mehreren der vorhergehenden Ansprüche, **dadurch gekennzeichnet, daß** ein Vorsatzgerät (7) für den Staubsauger einen in die Anschlußleitung (A2) eines Leistungsstellers (LST2) schaltbaren Kennungswiderstand (16) aufweist.

4. Staubsauger nach einem oder mehreren der vorhergehenden Ansprüche, **dadurch gekennzeichnet, daß** ein Leistungssteller (LST1 bis LST3) der Anschlußleitung (A1 bis A3) jeweils eine bestimmte Frequenz aufmoduliert.

5. Staubsauger nach einem oder mehreren der vorhergehenden Ansprüche, **dadurch gekennzeichnet, daß** ein Vorsatzgerät (7) der Anschlußleitung (A1 bis A3) eine bestimmte, unterschiedlich zur Frequenz des Leistungsstellers (LST1 bis LST3) und anderer Vorsatzgeräte (7) ausgeprägte Kennungsfrequenz aufmoduliert.

6. Staubsauger nach einem oder mehreren der vorhergehenden Ansprüche, **dadurch gekennzeichnet, daß** ein Vorsatzgerät (7) einen Ruhestandssensor (15) aufweist, welcher nach einem vorgegebenen Zeitintervall zu einem kurzschlußartigen, geringen Spannungsabfall bezüglich der Anschlußleitung (A2) führt.

7. Staubsauger nach Anspruch 3 **dadurch gekennzeichnet, daß** die Steuereinheit (11) in Abhängigkeit von den Kennungswiderständen (16) oder -frequenzen der Vorsatzgeräte (7) unterschiedliche Leistungen des Elektromotors (2) freigibt.

8. Staubsauger nach einem oder mehreren der vorhergehenden Ansprüche **dadurch gekennzeichnet, daß** bei Zusammenschaltung des Grundgerätes (1) mit einer Fahrlafette (5) eine mit der Steuereinheit (11) verbundene Anschlußleitung (A3) mit einer lafettenseitigen Betriebsanzeige (12) verbunden ist.

9. Staubsauger nach Anspruch 8 **dadurch gekennzeichnet, daß** die Betriebsanzeige (12) eine Glimmlampe ist.

10. Staubsauger nach Anspruch 9 **dadurch gekennzeichnet, daß** die Glimmlampe durch den an dem Grundgerät (1) angebrachten Leistungssteller (LST1) ausschaltbar ist.

11. Staubsauger nach Anspruch 8 **dadurch gekennzeichnet, daß** die zum Erlischen der Betriebsanzeige (12) führende Leistungsabschaltung von einem im Grundgerät (1) angeordneten Trennschalter (T1) hervorgerufen wird.

12. Staubsauger nach Anspruch 9 **dadurch gekennzeichnet, daß** die Glimmlampe über die im Grundgerät (1) angeordnete Steuereinheit (11) ansteuerbar ist.

13. Staubsauger nach Anspruch 9 **dadurch gekennzeichnet, daß** zur Ansteuerung der Glimmlampe diese einerends in der Fahrlafette (5) über einen Vorwiderstand (W1) und eine Diode (D1) an eine Leistungsleitung (L) und anderends über eine Anschlußleitung (A3) an die Steuereinheit (11) angeschlossen ist.

14. Staubsauger nach Anspruch 8 **dadurch gekennzeichnet, daß** der geräteseitige Leistungssteller (LST1) bei Verbindung mit dem Gerätestiel (4) oder mit der Fahrlafette (5) durch einen überlaufbaren Vorsprung in eine Aktivierungsstellung bewegt wird.

15. Staubsauger nach Anspruch 8 **dadurch gekennzeichnet, daß** der als Schiebeschalter ausgebildete, geräteseitige Leistungssteller (LST1) einen Fernbetätigungsfortsatz (42) aufweist, der durch Einstecken des Gerätestieles (4) oder der Fahrlafette (5) unter gleichzeitiger Betätigung des geräteseitigen Leistungsstellers (LST1) beaufschlagt wird.

16. Staubsauger nach Anspruch 15 **dadurch gekennzeichnet, daß** an dem Fernbetätigungsfortsatz (42) zwei unterschiedliche, überlaufbare Schiebenocken (43, 47) ausgebildet sind.

17. Staubsauger nach Anspruch 16 **dadurch gekennzeichnet, daß** ein erster Schiebenocken (43) nur überlaufbar ist in einer Minimalstellung (X) des Leistungssteller (LST1).

18. Staubsauger nach Anspruch 17 **dadurch gekennzeichnet, daß** der erste Schiebenocken (43) durch Ausweichen des Fernbetätigungsfortsatzes (42) nach unten überlaufbar ist.

19. Staubsauger nach Anspruch 17 **dadurch gekennzeichnet, daß** der Fernbetätigungsfortsatz (42) auf einer Stufenbahn (39) verschiebbar ist, wobei die Stufe (40) der Ausweichstellung des ersten Schiebenokkens (43) zugeordnet ist.

20. Staubsauger nach Anspruch 17 henden Ansprüche oder insbesondere danach, **dadurch gekennzeichnet, daß** der zweite Schiebenocken (47) in einer, im wesentlichen senkrechten Richtung zum ersten Schiebenocken (43) ausweichbar ist.

21. Staubsauger nach Anspruch 20 **dadurch gekennzeichnet, daß** der zweite Schiebenocken (47) elastisch ausfederbar ist.

22. Staubsauger nach Anspruch 20 **dadurch gekennzeichnet, daß** der zweite Schiebenocken (47) an einer elastisch ausfedernden Längswand (46) des Fernbetätigungsfortsatzes (42) ausgebildet ist.

23. Staubsauger nach Anspruch 8 wobei eine Schnittstelle (S3) zwischen dem Grundgerät (1) und dem Gerätestiel (4) bzw. zwischen dem Grundgerät (1) und der Fahrlafette (5) durch einen Stecker (37) und eine Steckdose (31) gebildet ist, **dadurch gekennzeichnet, daß** an der Steckdose (31) zur Zusammenwirkung mit dem Fernbetätigungsfortsatz (42) ein Rückhaltevorsprung (49, 50) ausgebildet ist, der mit einem Schiebenocken (43, 47) zusammenwirkt.

24. Staubsauger nach Anspruch 23 **dadurch gekennzeichnet, daß** der Rückhaltevorsprung (49) mit dem ersten Schiebenocken (43) zusammenwirkt.

25. Staubsauger nach Anspruch 23 **dadurch gekennzeichnet, daß** der Rückhaltevorsprung (49) als eine, in das Innere der Steckdose (31) ragende Zunge (48) ausgebildet ist.

26. Staubsauger nach Anspruch 25 **dadurch gekennzeichnet, daß** die Zunge (48) im Zuge einer Einführbewegung des Steckers (37) überlaufbar ist, im Zuge einer Auszugsbewegung des Steckers (37) jedoch widerhakenartig in Wirkung tritt.

## Claims

1. Vacuum cleaner operated by means of an electric motor (2), in particular vacuum cleaner system, with a basic appliance (1), a suction hose (6), an appliance stem (4) and various attachments (7) which can be optionally connected, the electric motor (2) being controllable with respect to its power and, furthermore, it being possible to carry out the control by means of different, mutually separate power regulators, preferably three power regulators (LST1 to LST3), **characterized in that** the power regulators (LST1 to LST3) are connected to a control unit (11) via a connecting line (A1 to A3) of their own in each case, and **in that**, when a number of power regulators (LST1 to LST3) are connected, a predetermined priority sequence leads to the activation of only one power regulator, this priority sequence being fixed in the control unit (11).

2. Vacuum cleaner according to Claim 1, **characterized in that** all the power regulators (LST1 to LST3) lead to an approximately identical voltage drop in the respective connecting line (A1 to A3).

3. Vacuum cleaner according to one or more of the preceding claims, **characterized in that** an attachment (7) for the vacuum cleaner has an identifying resistor (16) which can be switched into the connecting line (A2) of a power regulator (LST2).

4. Vacuum cleaner according to one or more of the preceding claims, **characterized in that** a power regulator (LST1 to LST3) modulates onto the connecting line (A1 to A3) a specific frequency in each case.

5. Vacuum cleaner according to one or more of the preceding claims, **characterized in that** an attachment (7) modulates onto the connecting line (A1 to A3) a specific, distinctive identifying frequency, different from the frequency of the power regulator (LST1 to LST3) and of other attachments (7).

6. Vacuum cleaner according to one or more of the preceding claims, **characterized in that** an attachment (7) has a standstill sensor (15), which after a predetermined time interval leads to a short-circuit-like, small voltage drop with respect to the connecting line (A2).

7. Vacuum cleaner according to Claim 3, **characterized in that** the control unit (11) releases different power outputs of the electric motor (2) according to the identifying resistors (16) or frequencies of the attachments (7).

8. Vacuum cleaner according to one or more of the preceding claims, **characterized in that**, when the basic appliance (1) is connected together with a carriage (5), a connecting line (A3) connected to the control unit (11) is connected to an operating indicator (12) on the carriage.

9. Vacuum cleaner according to Claim 8, **characterized in that** the operating indicator (12) is a glow lamp.

10. Vacuum cleaner according to Claim 9, **characterized in that** the glow lamp can be switched off by the power regulator (LST1) attached to the basic appliance (1).

11. Vacuum cleaner according to Claim 8, **characterized in that** the power leading to the operating indicator (12) going out is induced by a disconnecting switch (T1) disposed in the basic appliance (1).

12. Vacuum cleaner according to Claim 9, **characterized in that** the glow lamp can be activated by means of the control unit (11) disposed in the basic appliance (1).

13. Vacuum cleaner according to Claim 9, **characterized in that**, for activating the glow lamp, it is connected at one end in the carriage (5) via a series resistor (W1) and a diode (D1) to a power line (L) and is connected at the other end via a connecting line (A3) to the control unit (11).

14. Vacuum cleaner according to Claim 8, **characterized in that**, when it is connected to the appliance stem (4) or to the carriage (5), the power regulator (LST1) on the appliance is moved into an activating position by a projection which can be run over.

15. Vacuum cleaner according to Claim 8, **characterized in that** the power regulator (LST1) on the appliance, formed as a sliding switch, has a remote-control continuation (42), which is actuated by insertion of the appliance stem (4) or the carriage (5) with simultaneous actuation of the power regulator (LST1) on the appliance.

16. Vacuum cleaner according to Claim 15, **characterized in that** two different sliding cams (43, 47) which can be run over are formed on the remote-control continuation (42).

17. Vacuum cleaner according to Claim 16, **characterized in that** a first sliding cam (43) can be run over only in a minimum position (X) of the power regulator (LST1).

18. Vacuum cleaner according to Claim 17, **characterized in that** the first sliding cam (43) can be run over by the remote-control continuation (42) moving down out of the way.

19. Vacuum cleaner according to Claim 17, **characterized in that** the remote-control continuation (42) is displaceable on a stepped path (39), the step (40) being assigned to the out-of-the-way position of the first sliding cam (43).

20. Vacuum cleaner according to Claim 17, **characterized in that** the second sliding cam (47) can move out of the way in a direction substantially perpendicular to the first sliding cam (43).

21. Vacuum cleaner according to Claim 20, **characterized in that** the second sliding cam (47) is resiliently deflectable.

22. Vacuum cleaner according to Claim 20, **characterized in that** the second sliding cam (47) is formed on a resiliently deflecting longitudinal wall (46) of the remote-control continuation (42).

23. Vacuum cleaner according to Claim 8, an interface (S3) between the basic appliance (1) and the appliance stem (4) or between the basic appliance (1) and the carriage (5) being formed by a plug (37) and a socket (31), **characterized in that**, for interaction with the remote-control continuation (42), on the socket (31) there is formed a restraining projection (49, 50), which interacts with a sliding cam (43, 47).

24. Vacuum cleaner according to Claim 23, **characterized in that** the restraining projection (49) interacts with the first sliding cam (43).

25. Vacuum cleaner according to Claim 23, **characterized in that** the restraining projection (49) is formed as a tongue (48) protruding into the interior of the socket (31).

26. Vacuum cleaner according to Claim 25, **characterized in that** the tongue (48) can be run over in the course of an insertion movement of the plug (37), but acts in the manner of a barb in the course of a pulling-out movement of the plug (37).

## Revendications

1. Aspirateur fonctionnant au moyen d'un moteur électrique (2), en particulier système d'aspirateur équipé d'un appareil de base (1), d'un flexible d'aspiration (6), d'un manche d'appareil (4) et d'appareils additionnels (7) différents et à raccorder en option, le moteur électrique (2) pouvant être contrôlé en ce qui concerne sa puissance et le contrôle pouvant également être effectué au moyen de régulateurs de puissance différents et séparés les uns des autres, de préférence trois régulateurs de puissance (LST1 à LST3), **caractérisé en ce que** les régulateurs de puissance (LST1 à LST3) sont chacun reliés à une unité de commande (11) au moyen d'une ligne de raccordement (A1 à A3) propre et spécifique et **en ce que**, pour des régulateurs de puissance (LST1 à LST3) reliés de façon multiple, une séquence de priorité prédéfinie entraîne l'activation de seulement un régulateur de puissance, cette séquence de priorité étant définie dans l'unité de commande (II).

2. Aspirateur selon la revendication 1, **caractérisé en ce que** tous les régulateurs de puissance (LST1 à LST3) entraînent une chute de tension identique dans la ligne de raccordement respective (A1 à A3).

3. Aspirateur selon l'une ou plusieurs des revendications, **caractérisé en ce qu'**un appareil additionnel (7) pour l'aspirateur présente une résistance d'identification (16) commutable dans la ligne de raccordement (A2) d'un régulateur de puissance (LST2).

4. Aspirateur selon l'une ou plusieurs des revendications, **caractérisé en ce qu'**un régulateur de puissance (LST1 à LST3) de la ligne de raccordement (A1 à A3) module chacun à une fréquence déterminée.

5. Aspirateur selon l'une ou plusieurs des revendications, **caractérisé en ce qu'**un appareil additionnel (7) de la ligne de raccordement (A1 à A3) module une fréquence d'identification définie et **caractérisée** différemment par rapport à la fréquence du régulateur de puissance (LST1 à LST2) et d'autres appareils additionnels (7).

6. Aspirateur selon l'une ou plusieurs des revendications, **caractérisé en ce qu'**un appareil additionnel (7) présente un capteur de position de repos (15), qui entraîne après un intervalle de temps défini une chute de tension faible et du type court-circuit en ce qui concerne la ligne de raccordement (A2).

7. Aspirateur selon la revendication 3, **caractérisé en ce que** l'unité de commande (11) autorise des puissances différentes du moteur électrique (2) en fonction des résistances d'identification (16) ou des fréquences d'identification des appareils additionnels (7).

8. Aspirateur selon l'une ou plusieurs des revendications, **caractérisé en ce que**, lors de l'accouplement de l'appareil de base (1) avec un support de déplacement (5), une ligne de raccordement (A3) reliée à l'unité de commande (11) est reliée à un affichage de service (12) du côté du support de déplacement.

9. Aspirateur selon la revendication 8, **caractérisé en ce que** l'affichage de service (12) est une lampe à décharge.

10. Aspirateur selon la revendication 9, **caractérisé en ce que** la lampe à décharge peut être déconnectée par le régulateur de puissance (LST1) placé sur l'appareil de base (1).

11. Aspirateur selon la revendication 8, **caractérisé en ce que** la déconnexion de puissance entraînant l'extinction de l'affichage de service (12) est provoquée par un sectionneur de puissance (T1) disposé dans l'appareil de base (1).

12. Aspirateur selon la revendication 9, **caractérisé en ce que** la lampe à décharge peut être commandée par l'unité de commande (11) disposée dans l'appareil de base (1).

13. Aspirateur selon la revendication 9, **caractérisé en ce que**, pour la commande de la lampe à décharge, celle-ci est raccordée d'une part dans le support de déplacement (5) au moyen d'une résistance ballast (W1) et d'une diode (D1) à une ligne de raccordement de puissance (L) et d'autre part par une ligne de raccordement (A3) à l'unité de commande (11).

14. Aspirateur selon la revendication 8, **caractérisé en ce que** le régulateur de puissance (LST1) du côté appareil est déplacé dans une position d'activation par une partie saillante qui peut être effacée en cas de liaison avec le manche d'appareil (4) ou avec le support de déplacement (5).

15. Aspirateur selon la revendication 8, **caractérisé en ce que** le régulateur de puissance (LST1) du côté appareil, conçu comme un interrupteur à coulisse, présente un prolongement (42) de télécommande, qui est sollicité par l'emboîtement du manche d'appareil (4) ou du support de déplacement (5) avec l'actionnement simultané du régulateur de puissance (LST1) du côté appareil.

16. Aspirateur selon la revendication 15, **caractérisé en ce que** deux cames coulissantes (43, 47) différentes et susceptibles d'être effacées sont réalisées sur le prolongement de télécommande (42).

17. Aspirateur selon la revendication 16, **caractérisé en ce qu'**une première came coulissante (43) peut être effacé seulement dans une position minimale (X) du régulateur de puissance (LST1).

18. Aspirateur selon la revendication 17, **caractérisé en ce que** la première came coulissante (43) peut être effacée par l'évitement du prolongement de commande (42) vers le bas.

19. Aspirateur selon la revendication 17, **caractérisé en ce que** le prolongement de télécommande (42) peut être déplacé sur une glissière à gradins (39), le gradin (40) étant associé à la position d'évitement de la première came coulissante (43).

20. Aspirateur selon la revendication 17, **caractérisé en ce que** la deuxième came coulissante (47) peut être effacée dans une direction sensiblement perpendiculaire par rapport à la première came coulissante (43).

21. Aspirateur selon la revendication 20, **caractérisé en ce que** la deuxième came coulissante (47) est susceptible de se dilater de façon élastique.

22. Aspirateur selon la revendication 20, **caractérisé en ce que** la deuxième came coulissante (47) est réalisée sur une paroi longitudinale (46) du prolongement de télécommande (42) se dilatant élastiquement.

23. Aspirateur selon la revendication 8, dans lequel une interface (S3) est formée par une fiche (37) et une prise (31) entre l'appareil de base (1) et le manche d'appareil (4) ou entre l'appareil de base (1) et le support de déplacement, **caractérisé en ce qu'**une partie saillante de retenue (49, 50), qui agit conjointement avec une came coulissante (43, 47) est réalisée sur la prise (31) pour coopérer avec le prolongement de télécommande (42).

24. Aspirateur selon la revendication 23, **caractérisé en ce que** la partie saillante de retenue (49) coopère avec la première came coulissante (43).

25. Aspirateur selon la revendication 23, **caractérisé en ce que** la partie saillante de retenue (49) est conçue comme une languette (48) dépassant à l'intérieur de la prise (31).

26. Aspirateur selon la revendication 25, **caractérisé en ce que** la languette (48) peut être effacée lors d'un mouvement d'introduction de la fiche (37), mais agit à la façon d'un crochet lors d'un mouvement de retrait de la fiche (37).
